# EUROPEAN PATENT APPLICATION

(11) **EP 4 773 615 A1**
(43) Date of publication of application: **08.07.2026**
(21) Application number: 23950872.4
(22) Date of filing: 29.08.2023
(51) Int. Cl.: H04N 21/422, H04N 21/472, G10L 15/26, G10L 25/57

(54) **IMAGE DISPLAY APPARATUS AND SYSTEM COMPRISING SAME**

(71) Applicant: LG Electronics Inc., Yeongdeungpo-gu Seoul 07336 (KR)
(72) Inventor: HEO, Seunghyun, Seoul 06772 (KR)
(74) Representative: Vossius & Partner Patentanwälte Rechtsanwälte mbB
(86) International application number: PCT/KR2023/012797
(87) International publication number: WO 2025/047997

(57) **Abstract**

The present disclosure relates to an image display apparatus and a system comprising same. The image display apparatus according to an embodiment of the present disclosure comprises: a display; an external apparatus interface unit that communicates with a remote control device; a network interface unit that communicates with at least one server; and a control unit, wherein the control unit may: on the basis that a first command for activating a function of receiving a speech input from the remote control device is received, output, through the display, a predetermined screen including a first object corresponding to the end of the function; on the basis that the speech input is received from the remote control device, output, through the predetermined screen, text corresponding to the speech input that has been received from the remote control device; and on the basis that a second command for selecting the first object is received, process the entire text that has been output through the predetermined screen.

## Description

### [Technical Field]

The present disclosure relates to an image display apparatus and a system including the same.

### [Background Art]

An image display apparatus is an apparatus that displays images for a user to watch. For example, an image display apparatus may include a television (TV), monitor, or notebook computer equipped with a liquid crystal display (LCD) or a OLED display using an organic light-emitting diode (OLED).

With technological advancements, various services utilizing voice recognition technology are being developed and provided across various fields, and various technological developments are underway to apply voice recognition technology to image display apparatus such as TV. Conventionally, in general, voice recognition is performed on words, phrases, or short sentences spoken by a user, and the image display apparatus performs operations based on the results of the voice recognition.

Meanwhile, with the rapid advancement of technology in the field of artificial intelligence, there's a growing trend toward developing services that analyze long texts entered by a user, and summarize the core content or provide answers. Accordingly, there is a need to develop a user interface that composes long text using the voice spoken by a user.

### [Disclosure]

### [Technical Problem]

An object of the present disclosure is to solve the aforementioned problems and other problems.

Another object of the present disclosure is to provide an image display apparatus capable of composing long text using a user's voice input, and a system including the same.

Another object of the present disclosure is to provide an image display apparatus capable of editing text using a user's voice input, and a system including the same.

Another object of the present disclosure is to provide an image display apparatus capable of recommending a keyword for sentence composition by considering the context of a text, and a system including the same.

### [Technical Solution]

In order to achieve the above object, an image display apparatus according to an embodiment of the present disclosure includes: a display; an external apparatus interface unit which communicates with a remote control device; a network interface unit which communicates with at least one server; and a control unit, wherein the control unit, on the basis that a first command for activating a function of receiving a voice input from the remote control device is received, outputs, through the display, a predetermined screen including a first object corresponding to a termination of the function, on the basis that the voice input is received from the remote control device, outputs, through the predetermined screen, a text corresponding to the voice input that is received from the remote control device, and on the basis that a second command for selecting the first object is received, processes an entire text that is output through the predetermined screen.

In order to achieve the above object, a system according to an embodiment of the present disclosure includes an image display apparatus, a remote control device, and at least one server, wherein the remote control device transmits a first command that activates a function of receiving a voice input to the image display apparatus, and transmits a voice input received through a microphone to the image display apparatus while the function is activated, wherein the image display apparatus outputs a predetermined screen including a first object corresponding to a termination of the function, on the basis that the first command is received from the remote control device, transmits the voice input received from the remote control device to the server, outputs a text corresponding to the voice input received from the server through the predetermined screen, and processes an entire text output through the predetermined screen, on the basis that a second command for selecting the first object is received.

### [Advantageous Effects]

The effects of the image display apparatus and the system including the same according to the present disclosure are described as follows.

According to at least one embodiment of the present disclosure, a long text can be composed by using a user's voice input.

According to at least one embodiment of the present disclosure, a text can be edited by using a user's voice input.

According to at least one embodiment of the present disclosure, keywords for sentence composition can be recommended by considering the context of the text.

Further scope of applicability of the present disclosure will become apparent from the following detailed description. However, it should be understood that the detailed description and specific embodiments such as preferred embodiments of the present disclosure are given by way of illustration only, since various changes and modifications within the spirit and scope of the present disclosure may be clearly understood by those skilled in the art.

### [Description of Drawings]

FIG. 1 is a diagram illustrating an image display system according to an embodiment of the present disclosure.
FIG. 2 is an internal block diagram of the image display apparatus of FIG. 1.
FIG. 3 is an internal block diagram of the control unit of FIG. 2.
FIG. 4A is a diagram illustrating a control method of a remote control device of FIG. 2, and FIG. 4B is an example of an internal block diagram of the remote control device of FIG. 2.
FIG. 5 is a diagram for explaining a server of FIG. 1.
FIG. 6 is a flowchart illustrating an operation method of an image display apparatus according to an embodiment of the present disclosure.
FIG. 7 is a flowchart illustrating an operation method of a system according to an embodiment of the present disclosure.
FIGS. 8 to 33 are diagrams for explaining the operation of an image display apparatus that composes text using voice input according to various embodiments of the present disclosure.

### [Mode for Invention]

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function. Therefore, the "module" and "part" may be used interchangeably.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

It will be understood that although the terms first, second, etc. may be used herein to describe various elements, these elements should not be limited by these terms. These terms are only used to distinguish one element from another.

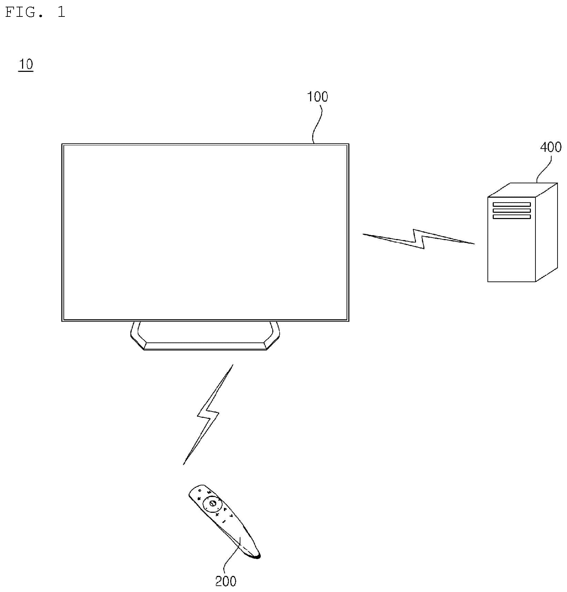

FIG. 1 is a diagram illustrating an image display system according to various embodiments of the present invention.

Referring to FIG. 1, the image display system 10 may include an image display apparatus 100 and/or a remote control device 200.

The image display apparatus 100 may be a device that processes and outputs an image. The image display apparatus 100 is not particularly limited as long as it may output a screen corresponding to an image signal, such as a TV, a notebook computer, and a monitor.

The image display apparatus 100 may receive a broadcast signal, process the signal, and output the processed broadcast image. When the image display apparatus 100 receives a broadcast signal, the image display apparatus 100 may correspond to a broadcast receiving apparatus.

The image display apparatus 100 may receive a broadcast signal wirelessly via an antenna, or may receive a broadcast signal wired via a cable. For example, the image display apparatus 100 may receive a terrestrial broadcast signal, a satellite broadcast signal, a cable broadcast signal, an Internet Protocol Television (IPTV) broadcast signal, etc.

The remote control device 200 may be connected to the image display apparatus 100 wired and/or wirelessly, and provide various control signals to the image display apparatus 100. In this case, the remote control device 200 may include a device that establishes a wired or wireless network with the image display apparatus 100 and, through the established network, transmits various control signals to the image display apparatus 100, or receives signals related to various operations processed in the image display apparatus 100 from the image display apparatus 100.

For example, various input devices such as a mouse, keyboard, space remote control, trackball, or joystick may be used as the remote control device 200. The remote control device 200 may be referred to as an external device, and it should be noted that the terms external device and remote control device may be used interchangeably hereinafter, as needed.

The image display apparatus 100 may be connected to only a single remote control device 200, or may be connected to two or more remote control devices 200 simultaneously, and may change an object displayed on the screen, or adjust the screen state, based on a control signal provided from each remote control device 200.

Meanwhile, the image display system 10 may further include at least one server 400. The image display apparatus 100 may transmit and receive data with the server 400. For example, the image display apparatus 100 may transmit and receive data with the server 400 via a network such as the Internet.

The image display apparatus 100 may transmit data related to an operation performed according to a user input to the server 400, and the server 400 may store the data received from the image display apparatus 100.

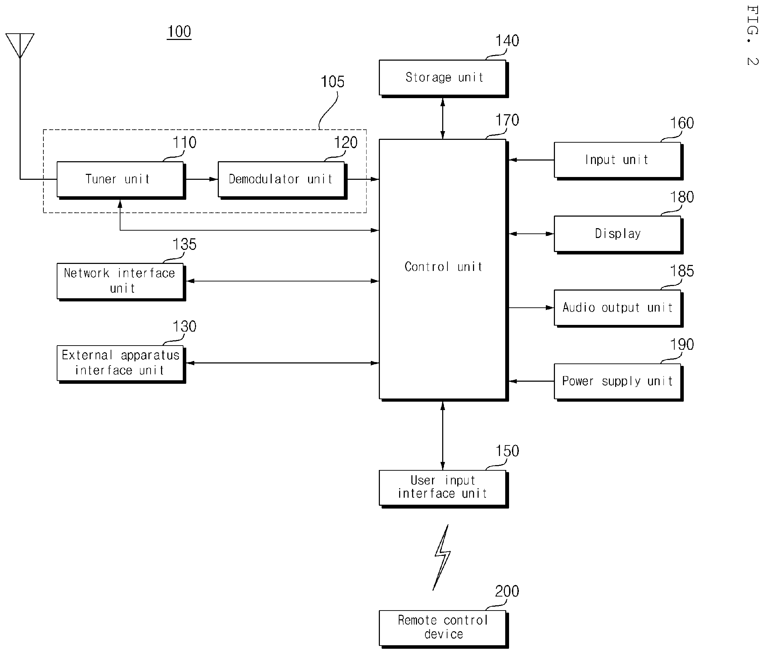

FIG. 2 is an internal block diagram of the image display apparatus of FIG. 1.

Referring to FIG. 2, the image display apparatus 100 may include a broadcast receiving unit 105, an external apparatus interface unit 130, a network interface unit 135, a storage unit 140, a user input interface unit 150, an input unit 160, a control unit 170, a display 180, an audio output unit 185, and/or a power supply unit 190.

The broadcast receiving unit 105 may include a tuner unit 110 and a demodulator unit 120.

Meanwhile, unlike the drawing, the image display apparatus 100 may include only the broadcast receiving unit 105 and the external apparatus interface unit 130, among the broadcast receiving unit 105, the external apparatus interface unit 130, and the network interface unit 135. That is, the image display apparatus 100 may not include the network interface unit 135.

The tuner unit 110 may select a broadcast signal corresponding to a channel selected by a user or all previously stored channels among broadcast signals received through an antenna (not shown) or a cable (not shown). The tuner unit 110 may convert the selected broadcast signal into an intermediate frequency signal or a baseband image or voice signal.

For example, if the selected broadcast signal is a digital broadcast signal, the tuner unit 110 may convert it into a digital IF signal (DIF), and if it is an analog broadcast signal, the tuner unit 110 may convert it into an analog baseband image or voice signal (CVBS/SIF). That is, the tuner unit 110 may process digital broadcast signals or analog broadcast signals. The analog baseband image or voice signal (CVBS/SIF) output from the tuner unit 110 may be directly input to the control unit 170.

Meanwhile, the tuner unit 110 may sequentially select a broadcast signal of all broadcast channels stored through a channel memory function among the received broadcast signals, and convert it into an intermediate frequency signal or a baseband image or a voice signal.

Meanwhile, the tuner unit 110 may be equipped with multiple tuners so as to receive broadcast signals of multiple channels. Alternatively, a single tuner that simultaneously receives broadcast signals of multiple channels is also possible.

The demodulation unit 120 may receive a digital IF signal (DIF) converted by the tuner unit 110 and perform a demodulation operation.

The demodulation unit 120 may output a stream signal (TS) after performing demodulation and channel decoding. The stream signal may be a multiplexed signal of an image signal, a voice signal, or a data signal.

The stream signal output from the demodulation unit 120 may be input to the control unit 170. The control unit 170 may perform demultiplexing, image/voice signal processing, etc., and then output an image through the display 180, and output a voice through the audio output unit 185.

The external apparatus interface unit 130 may transmit or receive data with a connected external device. To this end, the external apparatus interface unit 130 may include an A/V input/output unit (not shown).

The external apparatus interface unit 130 may be connected to an external device such as a Digital Versatile Disk (DVD), Blu-ray, game console, camera, camcorder, computer (laptop), set-top box, etc., via wired/wireless connection, and may also perform input/output operation with the external devices.

In addition, the external apparatus interface unit 130 may establish a communication network with various remote control devices 200 as illustrated in FIG. 1, and may receive a control signal related to the operation of the image display apparatus 100 from the remote control device 200, or transmit data related to the operation of the image display apparatus 100 to the remote control device 200.

The A/V input/output unit may receive image and voice signals from external devices. For example, the A/V input/output unit may include an Ethernet terminal, a USB terminal, a Composite Image Banking Sync (CVBS) terminal, a component terminal, an S-video terminal (analog), a Digital Visual Interface (DVI) terminal, an High Definition Multimedia Interface (HDMI) terminal, an Mobile High-definition Link (MHL) terminal, an RGB terminal, a D-SUB terminal, an IEEE 1394 terminal, an SPDIF terminal, a Liquid HD terminal, etc. Digital signals input through these terminals may be transmitted to the control unit 170. At this time, analog signals input through the CVBS terminal and the S-video terminal may be converted into digital signals through an analog-to-digital converter (not shown) and transmitted to the control unit 170.

The external apparatus interface unit 130 may include a wireless communication unit (not shown) for short-range wireless communication with other electronic devices. Through this wireless communication unit, the external apparatus interface unit 130 may exchange data with an adjacent mobile terminal. For example, in a mirroring mode, the external apparatus interface unit 130 may receive device information, running application information, application images, etc. from the mobile terminal.

The external apparatus interface unit 130 may perform short-range wireless communication by using Bluetooth, Radio Frequency Identification (RFID), infrared Data Association (IrDA), Ultra-Wideband (UWB), ZigBee, etc.

The network interface unit 135 may provide an interface for connecting the image display apparatus 100 to a wired/wireless network including the Internet.

The network interface unit 135 may include a communication module (not shown) for connection to the wired/wireless network. For example, the network interface unit 135 may include a communication module for Wireless LAN (WLAN) (Wi-Fi), Wireless broadband (Wibro), World Interoperability for Microwave Access (Wimax), High Speed Downlink Packet Access (HSDPA), etc.

The network interface unit 135 may transmit or receive data with other user or other electronic device, via the connected network or another network linked to the connected network.

The network interface unit 135 may receive web content or data provided by a content provider or network operator. That is, the network interface unit 135 may receive content such as movie, advertisement, game, VOD, broadcast, etc., provided by a content provider or network provider and related information, via the network.

The network interface unit 135 may receive the update information and update file of firmware provided by the network operator, and may transmit data to the Internet or to the content provider or network operator.

The network interface unit 135 may select and receive a desired application from among applications open to the public, via the network.

The storage unit 140 may store programs for the processing and control of each signal within the control unit 170, or may store processed image, voice, or data signal. For example, the storage unit 140 may store application programs designed to perform various tasks that can be processed by the control unit 170, and may selectively provide some of the stored application programs, upon request from the control unit 170.

The programs stored in the storage unit 140 are not particularly limited as long as they can be executed by the control unit 170.

The storage unit 140 may also perform a function for temporarily storing image, voice, or data signals received from an external device via the external apparatus interface unit 130.

The storage unit 140 may store information related to a certain broadcast channel through a channel memory function, such as a channel map.

Although the storage unit 140 of FIG. 2 illustrates an embodiment in which it is provided separately from the control unit 170, the scope of the present invention is not limited thereto, and the storage unit 140 may be included within the control unit 170.

The storage unit 140 may include at least one of volatile memory (e.g., DRAM, SRAM, SDRAM, etc.) nonvolatile memory (e.g., flash memory), hard disk drive (HDD), solid-state drive (SSD), etc.. In various embodiments of the present invention, the storage unit 140 and memory may be used interchangeably.

The user input interface unit 150 may transmit a signal input by a user to the control unit 170, or transmit a signal from the control unit 170 to a user.

For example, it may transmit/receive a user input signal such as power on/off, channel selection, and screen settings from the remote control device 200, may transmit a user input signal input from local keys (not shown) such as power key, channel key, volume key, and setting value to the control unit 170, may transmit a user input signal input from a sensor unit (not shown) that senses user gestures to the control unit 170, or may transmit a signal from the control unit 170 to the sensor unit.

The input unit 160 may be provided on one side of the main body of the image display apparatus 100. For example, the input unit 160 may include a touch pad, a physical button, etc.

The input unit 160 may receive various user commands related to the operation of the image display apparatus 100, and transmit control signals corresponding to the input commands to the control unit 170.

The input unit 160 may include at least one microphone (not shown), and receive a user's voice through the microphone.

The control unit 170 may include at least one processor and may control the overall operation of the image display apparatus 100 by using the processor included therein. Here, the processor may be a general processor, such as a central processing unit (CPU). Obviously, the processor may be a dedicated device, such as an ASIC, or another hardware-based processor.

The control unit 170 may demultiplex a stream input through the tuner unit 110, the demodulator 120, the external apparatus interface unit 130, or the network interface unit 135, or may process the demultiplexed signals to generate and output a signal for image or voice output.

The display 180 may generate a driving signal by converting an image signal, data signal, OSD signal, control signal processed by the control unit 170 or an image signal, data signal, control signal, etc. received from the external apparatus interface unit 130.

The display 180 may include a display panel (not shown) having a plurality of pixels.

The plurality of pixels provided on the display panel may have RGB sub-pixels. Alternatively, the plurality of pixels provided on the display panel may have RGBW sub-pixels. The display 180 may generate a driving signal for the plurality of pixels by converting an image signal, data signal, OSD signal, control signal, etc. processed by the control unit 170.

The display 180 may be a Plasma Display Panel (PDP), an Liquid Crystal Display (LCD), an Organic Light Emitting Diode (OLED), a flexible display, etc., and may also be a 3D display. The 3D display 180 may be divided into a glasses-free type and a glasses-based type.

Meanwhile, the display 180 may be configured as a touch screen and used as an input device in addition to an output device.

The audio output unit 185 receives a signal processed by the control unit 170 and outputs it as voice.

The image signal processed by the control unit 170 may be input to the display 180 and displayed as an image corresponding to a relevant image signal. Furthermore, the image signal processed by the control unit 170 may be input to an external output device via the external apparatus interface unit 130.

The voice signal processed by the control unit 170 may be output as voice to the audio output unit 185. In addition, the voice signal processed by the control unit 170 may be input to an external output device via the external apparatus interface unit 130.

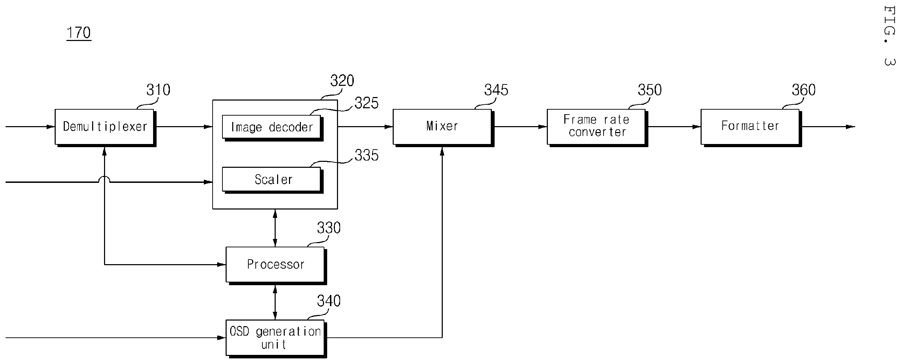

Although not shown in FIG. 2, the control unit 170 may include a demultiplexer, an image processing unit, etc. These will be described later with reference to FIG. 3.

In addition, the control unit 170 may control the overall operation of the image display apparatus 100. For example, the control unit 170 may control the tuner unit 110 to tune a broadcast corresponding to a channel selected by a user or a pre-stored channel.

Furthermore, the control unit 170 may control the image display apparatus 100 by a user command input through the user input interface unit 150 or an internal program.

Meanwhile, the control unit 170 may control the display 180 to display an image. The image displayed on the display 180 may be a still image or a moving image, and may be a 2D image or a 3D image.

Meanwhile, the control unit 170 may display a certain 2D object within the image displayed on the display 180. For example, the object may be at least one of a connected web page (newspaper, magazine, etc.), an Electronic Program Guide (EPG), various menus, a widget, an icon, a still image, a moving image, and a text.

Meanwhile, the image display apparatus 100 may further include a camera unit (not shown). The camera unit may capture images of a user. The camera unit may be implemented with a single camera, but is not limited thereto, and may also be implemented with a plurality of cameras. Meanwhile, the camera unit may be embedded in the image display apparatus 100 on the upper portion of the display 180 or may be separately arranged. Image information captured by the camera unit may be input to the control unit 170.

The control unit 170 may recognize the user's location, on the basis of the image captured by the camera unit. For example, the control unit 170 may determine the distance (z-axis coordinate) between a user and the image display apparatus 100. In addition, the control unit 170 may determine the x-axis coordinate and y-axis coordinate within the display 180 corresponding to the user's location.

The control unit 170 may detect the user's gesture, on the basis of the image captured by the camera unit, or each detected signal from the sensor unit, or a combination thereof.

The power supply unit 190 may supply power throughout the entire image display apparatus 100. In particular, it may supply power to the control unit 170 that can be implemented in the form of a system on chip (SOC), the display 180 for image display, and the audio output unit 185 for audio output.

Specifically, the power supply unit 190 may include a converter (not shown) that converts AC power into DC power, and a DC/DC converter (not shown) that converts the level of DC power.

The remote control device 200 may transmit user input to the user input interface unit 150. To this end, the remote control device 200 may use Bluetooth, Radio Frequency (RF) communication, infrared Infrared Radiation communication, Ultra-wideband (UWB), ZigBee, etc. In addition, the remote control device 200 may receive image, voice, or data signals output from the user input interface unit 150, and display the same on the remote control device 200 or output as voice.

Meanwhile, the above-described image display apparatus 100 may be a digital broadcast receiver capable of receiving a fixed or mobile digital broadcast.

Meanwhile, the block diagram of the image display apparatus 100 illustrated in FIG. 2 is merely a block diagram for an embodiment of the present invention, and each component of the block diagram may be integrated, added, or omitted depending on the specifications of the actually implemented image display apparatus 100.

That is, two or more components may be combined into a single component, or a single component may be subdivided into two or more components, as needed. Furthermore, the functions performed by each block are intended to illustrate an embodiment of the present invention, and the specific operations or devices thereof do not limit the scope of the present invention.

FIG. 3 is an internal block diagram of the control unit of FIG. 2.

Referring to FIG. 3, the control unit 170 according to an embodiment of the present invention may include a demultiplexer 310, an image processing unit 320, a processor 330, an OSD generation unit 340, a mixer 345, a frame rate converter 350, and/or a formatter 360. In addition, a audio processing unit (not shown) and a data processing unit (not shown) may be further included.

The demultiplexer 310 may demultiplex an input stream. For example, when MPEG-2 TS is input, it may be demultiplexed to separate the input into image, voice, and data signal, respectively. Here, the stream signal input to the demultiplexer 310 may be a stream signal output from the tuner unit 110, the demodulator 120, or the external apparatus interface unit 130.

The image processing unit 320 may perform image processing of a demultiplexed image signal. To this end, the image processing unit 320 may include an image decoder 325 and a scaler 335.

The image decoder 325 may decode the demultiplexed image signal, and the scaler 335 may perform scaling so that the resolution of the decoded image signal can be output on the display 180.

The image decoder 325 may include decoders of various standards. For example, the image decoder may include an MPEG-2, H.264 decoder, a 3D image decoder for color images and depth image, a decoder for multi-view images, etc.

The processor 330 may control the overall operation inside the image display apparatus 100 or the control unit 170. For example, the processor 330 may control the tuner unit 110 to tune a broadcast corresponding to a user-selected channel or a pre-stored channel.

Furthermore, the processor 330 may control the image display apparatus 100 by a user command input through the user input interface unit 150 or an internal program.

Furthermore, the processor 330 may control data transmission with the network interface unit 135 or the external apparatus interface unit 130.

Furthermore, the processor 330 may control the operation of the demultiplexer 310, the image processing unit 320, the OSD generation unit 340, and the like within the control unit 170.

The OSD generation unit 340 may generate an OSD signal in response to a user input or autonomously. For example, based on a user input signal input through the input unit 160, it may generate a signal for displaying various information on the screen of the display 180 in the form of graphic or text.

The generated OSD signal may include various data, such as a user interface screen of the image display apparatus 100, various menu screens, a widget, and an icon. Furthermore, the generated OSD signal may include a 2D or 3D object.

Furthermore, the OSD generation unit 340 may generate a pointer displayable on the display 180, on the basis of a pointing signal input from the remote control device 200.

The OSD generation unit 340 may include a pointing signal processing unit (not shown) that generates a pointer. The pointing signal processing unit (not shown) may be provided separately, rather than within the OSD generation unit 240.

The mixer 345 may mix the OSD signal generated by the OSD generation unit 340 with the decoded image signal processed by the image processing unit 320. The mixed image signal may be provided to the frame rate converter 350.

The frame rate converter (FRC) 350 may convert the frame rate of the input image. Alternatively, the frame rate converter 350 is able to output intactly, without performing a separate frame rate conversion.

The formatter 360 may arrange the left-eye image frame and right-eye image frame of the frame rate-converted 3D image. In addition, it may output a synchronization signal (Vsync) for opening the left and right eye glasses of a 3D viewing device (not shown).

Meanwhile, the formatter 360 may convert the format of an input image signal into an image signal for display on the display 180 and output the converted signal.

Furthermore, the formatter 360 may change the format of a 3D image signal. For example, the formatter may change the format into any one of various 3D formats, such as a side-by-side format, a top/down format, a frame sequential format, an interlaced format, and a checker box format.

Meanwhile, the formatter 360 may also convert a 2D image signal into a 3D image signal. For example, according to a 3D image generation algorithm, an edge or a selectable object may be detected within a 2D image signal, and an object based on the detected edges or a selectable object may be separated and generated as a 3D image signal. At this time, the generated 3D image signal may be separated into the left-eye image signal L and the right-eye image signal R and aligned, as described above.

Meanwhile, although not shown in the drawing, a 3D processor (not shown) for 3-dimensional effect signal processing may be further arranged, after the formatter 360. This 3D processor may adjust the brightness, tint, and color of the image signal to improve the 3D effect. For example, it may perform signal processing to make near-field images clearer and far-field images blurred. Meanwhile, the functionality of this 3D processor may be incorporated into the formatter 360 or the image processing unit 320.

Meanwhile, the audio processing unit (not shown) within the control unit 170 may perform voice processing of the demultiplexed voice signal. For this purpose, the audio processing unit (not shown) may be equipped with various decoders.

In addition, the audio processing unit (not shown) within the control unit 170 may process bass, treble, volume control, etc.

The data processing unit (not shown) within the control unit 170 may perform data processing of the demultiplexed data signal. For example, if the demultiplexed data signal is an encoded data signal, it may be decoded. The encoded data signal may be electronic program guide (EPG) information including broadcast information such as the start and end times of broadcast programs broadcast on each channel.

Meanwhile, the block diagram of the control unit 170 illustrated in FIG. 3 is merely a block diagram for an embodiment of the present invention, and each component of the block diagram may be integrated, added, or omitted depending on the specifications of the actually implemented control unit 170.

In particular, the frame rate converter 350 and the formatter 360 may not be provided within the control unit 170, but may be provided separately, or may be provided separately as a single module.

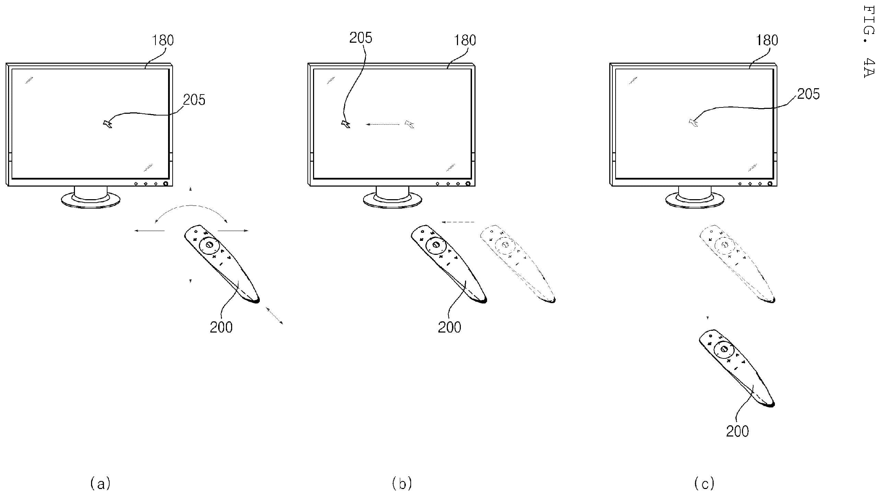

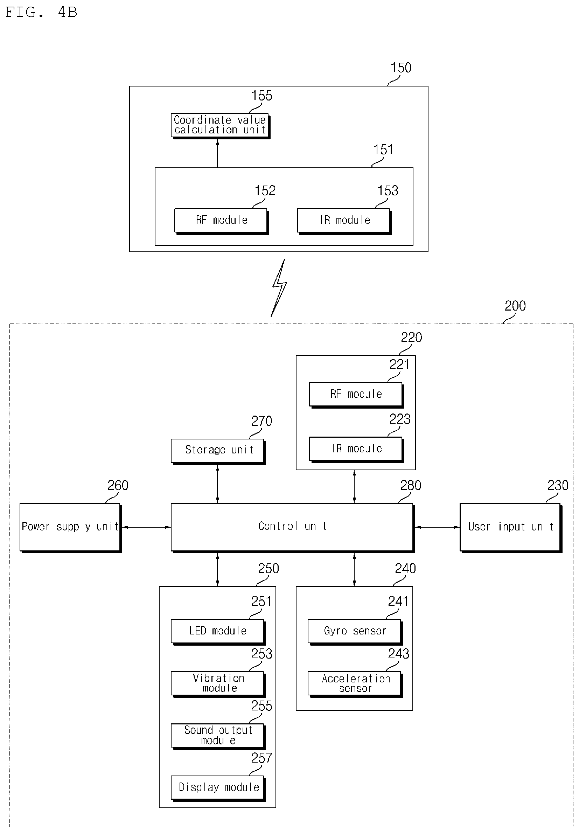

FIG. 4A is a diagram illustrating a control method of the remote control device of FIG. 2, and FIG. 4B is an example of an internal block diagram of the remote control device of FIG. 2.

Referring to FIG. 4A, it may be seen that a pointer 205 corresponding to the remote control device 200 is displayed on the display 180 of the image display apparatus 100.

Referring to FIG. 4A(a), a user may move or rotate the remote control device 200 in the up-down, left-right, forward-rearward directions. At this time, the pointer 205 displayed on the display 180 of the image display apparatus 100 may be displayed in response to the movement of the remote control device 200. Since the pointer 205 of the remote control device 200 moves and is displayed according to the movement in 3D space, as shown in the drawing, the remote control device 200 may be referred to as a space remote control or a 3D pointing device.

Referring to FIG. 4A(b), when a user moves the remote control device 200 to the left, it may be seen that the pointer 205 displayed on the display 180 of the image display apparatus 100 also moves to the left in response to the movement of the remote control device 200.

Information related to the movement of the remote control device 200 detected by the sensor of the remote control device 200 may be transmitted to the image display apparatus 100. The image display apparatus 100 may calculate the coordinates of the pointer 205 from the information related to the movement of the remote control device 200. The image display apparatus 100 may display the pointer 205 corresponding to the calculated coordinates.

Referring to FIG. 4A(c), while pressing a specific button provided in the remote control device 200, a user may move the remote control device 200 away from the display 180. As a result, a selection area within the display 180 corresponding to the pointer 205 may be zoomed in and displayed in an enlarged manner. Conversely, if a user moves the remote control device 200 to approach the display 180, while pressing a specific button on the remote control device 200, the selection area within the display 180 corresponding to the pointer 205 may be zoomed out and displayed in a reduced size.

Meanwhile, if the remote control device 200 moves away from the display 180, the selection area may be zoomed out. If the remote control device 200 approaches the display 180, the selection area may be zoomed in.

Meanwhile, if the user presses a specific button on the remote control device 200, recognition of the up/down and left/right movement may be excluded. That is, when the remote control device 200 moves away from or toward the display 180, up/down, left/right movement is not recognized, and only forward/rearward movement is recognized. When a user does not press a specific button within the remote control device 200, only the up, down, left, and right movements of the remote control device 200 may be recognized, and accordingly, only the pointer 205 may move.

Meanwhile, the movement speed or direction of the pointer 205 may correspond to the movement speed or direction of the remote control device 200.

Referring to FIG. 4B, the remote control device 200 may include a wireless communication unit 220, a user input unit 230, a sensor unit 240, an output unit 250, a power supply unit 260, a storage unit 270, and/or a control unit 280.

The wireless communication unit 220 may transmit and receive signals with the image display apparatus 100.

In this embodiment, the remote control device 200 may include an RF module 221 capable of transmitting and receiving signals with the image display apparatus 100 according to Radio Frequency (RF) communication standards. Furthermore, the remote control device 200 may include an IR module 223 capable of transmitting and receiving signals with the image display apparatus 100 according to Infrared Radiation (IR) communication standards.

The remote control device 200 may transmit a signal including information related to the movement of the remote control device 200 to the image display apparatus 100 through the RF module 221. The remote control device 200 may receive a signal transmitted by the image display apparatus 100 through the RF module 221.

The remote control device 200 may transmit commands, such as power on/off, channel change, and volume change, to the image display apparatus 100, through the IR module 223.

The user input unit 230 may be configured with a keypad, a button, a touchpad, a touch screen, etc. A user may input commands related to the image display apparatus 100 into the remote control device 200 by operating the user input unit 230.

If the user input unit 230 includes a hard key button, a user may input commands related to the image display apparatus 100 into the remote control device 200 by pushing a hard key button.

If the user input unit 230 includes a touch screen, a user may input a command related to the image display apparatus 100 into the remote control device 200 by touching a soft key on the touch screen.

Meanwhile, the user input unit 230 may include various types of input means that may be operated by a user, such as a scroll key or a jog key. This embodiment does not limit the scope of the present invention.

The user input unit 230 may include a microphone. A user may utter a voice into the microphone provided in the user input unit 230. At this time, the microphone provided in the user input unit 230 may receive the voice uttered by the user.

The sensor unit 240 may include a gyro sensor 241 or an acceleration sensor 243. The gyro sensor 241 may sense the movement of the remote control device 200.

The gyro sensor 241 may sense information related to the operation of the remote control device 200, based on the x, y, and z axes. The acceleration sensor 243 may sense information related to the movement speed of the remote control device 200. Meanwhile, the sensor unit 240 may further include a distance measuring sensor capable of sensing the distance from the display 180.

The output unit 250 may output an image or sound corresponding to the operation of the user input unit 230 or to a signal transmitted from the image display apparatus 100. Through the output unit 250, a user may recognize whether the user input unit 230 has been operated or whether the image display apparatus 100 is being controlled.

The output unit 250 may include an LED module 251 including at least one light-emitting element (e.g., Light Emitting Diode (LED)), a vibration module 253 that generates vibrations, a sound output module 255 that outputs a sound, and/or a display module 257 that outputs an image.

The power supply unit 260 may supply power to each component of the remote control device 200. The power supply unit 260 may include at least one battery (not shown).

The power supply unit 260 may prevent unnecessary power consumption by stopping the power supply to each component of the remote control device 200, when no movement of the remote control device 200 is detected for a certain period of time through the sensor unit 240.

The power supply unit 260 may resume power supply to each component of the remote control device 200, when a certain event occurs. For example, the power supply unit 260 may resume power supply to each component, when a certain key of the remote control device 200 is operated. For example, if movement of the remote control device 200 is detected through the sensor unit 240, the power supply unit 260 may resume power supply to each component of the remote control device 200.

The storage unit 270 may store various programs, application data, etc. required for the control or operation of the remote control device 200.

When the remote control device 200 wirelessly transmits and receives signals with the image display apparatus 100 through the RF module 221, the remote control device 200 and the image display apparatus 100 may transmit and receive signals through a certain frequency band. The control unit 280 of the remote control device 200 may store and refer to information, in the storage unit 270, related to a frequency band through which signals may be wirelessly transmitted and received to/from the remote control device 200 paired with the image display apparatus 100.

The control unit 280 may include at least one processor, and may control the overall operation of the remote control device 200 by using the processor included therein.

The control unit 280 may transmit a control signal corresponding to a certain key operation of the user input unit 230 or a control signal corresponding to a movement of the remote control device 200 sensed by the sensor unit 240 to the image display apparatus 100 through the wireless communication unit 220.

The user input interface unit 150 of the image display apparatus 100 may include a wireless communication unit 151 capable of wirelessly transmitting and receiving signals with the remote control device 200, and a coordinate value calculation unit 155 capable of calculating the coordinate value of a pointer corresponding to the operation of the remote control device 200.

The user input interface unit 150 may wirelessly transmit and receive signals with the remote control device 200 through a RF module 152. Furthermore, the user input interface unit 150 may receive signals transmitted by the remote control device 200 in accordance with the IR communication standard through an IR module 153.

The coordinate value calculation unit 155 may calculate coordinate values (x, y) of the pointer 205 to be displayed on the display 170 by correcting hand tremors or errors, from a signal corresponding to the operation of the remote control device 200 received through the wireless communication unit 151.

The transmission signal of remote control device 200 input to the image display apparatus 100 through the user input interface unit 150 may be transmitted to the control unit 170 of the image display apparatus 100. The control unit 170 of the image display apparatus 100 may check information related to the operation of the remote control device 200 and the key operation from the signal transmitted from the remote control device 200, and control the image display apparatus 100 in response thereto.

As another example, the remote control device 200 may calculate pointer coordinate values corresponding to the operation and output them to the user input interface unit 150 of the image display apparatus 100. In this case, the user input interface unit 150 of the image display apparatus 100 may transmit information related to the received pointer coordinate values to the control unit 170 without a separate hand tremor or an error correction process.

In addition, as another example, the coordinate value calculation unit 155 may be provided within the control unit 170, rather than the user input interface unit 150, unlike in the drawing.

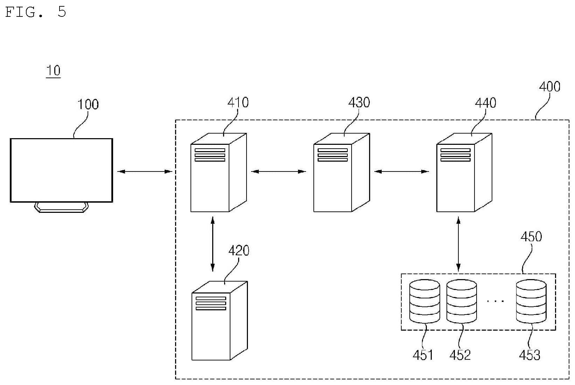

FIG. 5 is a drawing for explaining the server of FIG. 1.

Referring to FIG. 5, the server 400 may include a relay server 410, an Speech To Text (STT) server 420, an Natural Language Processing (NLP) server 430, an Artificial Intelligence (AI) server 440, and/or a database 450. In the present disclosure, the relay server 410, the STT server 420, the NLP server 430, and the AI server 440 are described as being distinct from each other, but are not limited thereto. For example, two or more of the relay server 410, the STT server 420, the NLP server 430, and the AI server 440 may be configured as one server.

The relay server 410 may communicate with the image display apparatus 100. The relay server 410 may transmit data between the STT server 420, the NLP server 430, and the image display apparatus 100. The relay server 410 may store at least a portion of the data transmitted between the STT server 420, the NLP server 430, and the image display apparatus 100.

The STT server 420 may receive voice data. The STT server 420 may convert the voice data into text data. The STT server 420 may transmit the text data to the image display apparatus 100 via the relay server 410. The STT server 420 may also be referred to as an Automatic Speech Recognition (ASR) server.

The STT server 420 may use a language model to improve the accuracy of voice-to-text conversion. A language model may refer to a model that may calculate the probability of a sentence or the probability of a next word when previous words are given. For example, a language model may include probabilistic language models such as a unigram model. Bigram model, and an N-gram model. That is, the STT server 420 may determine whether text data converted from voice data has been appropriately converted by using the language model, thereby enhancing the accuracy of conversion into text data.

The NLP server 430 may receive text data. The NLP server 430 may perform intent analysis on the text data, based on the received text data. The NLP server 430 may transmit intent analysis information indicating the result of the intent analysis to the image display apparatus 100 via the relay server 410.

According to an embodiment, the NLP server 430 may sequentially perform a morphological analysis step, a syntax analysis step, a speech act analysis step, a dialogue processing step, etc., with respect the text data, to generate intent analysis information. The morphological analysis step is a step of classifying text data corresponding to the user's spoken voice into a morpheme unit which is the smallest unit that has meaning, and determining the part of speech for each classified morpheme. The syntax analysis step is the step that uses the results of the morphological analysis step to classify text data into noun phrases, verb phrases, adjective phrases, etc., and determines what kind of relationship exists between each divided phrase. Through the syntax analysis step, the subject, object, and modifiers of the user's speech may be determined. The speech act analysis step is the step that analyzes the intention of the user's spoken speech, by using the results of the syntax analysis step. Specifically, the speech act analysis step is the step that determines the intent of the sentence, such as whether a user is asking a question, making a request, or simply expressing an emotion. The dialogue processing step is the step that determines whether to respond to the user's speech, respond, or ask for additional information, by using the results of the speech act analysis step.

The AI server 440 may transmit a response to a request from the NLP server 430 to the relay server 410 or the NLP server 430. For example, when a content search request is received from the NLP server 430, the AI server 440 may transmit data for at least one content corresponding to the received content search request to the NLP server 430. For example, when a recommendation request for a keyword (hereinafter, "related keyword") related with a certain keyword is received from the NLP server 430, the AI server 440 may transmit data for at least one related keyword corresponding to the certain keyword to the NLP server 430.

According to an embodiment, the AI server 440 may include multiple AI agent servers. Here, the multiple AI agent servers may correspond to a type of request from the NLP server 430 respectively. For example, the AI server 440 may utilize a first AI agent server when a text-related request is received from the NLP server 430, and may utilize a second AI agent server when a moving image-related request is received.

The database 450 may store data used to generate a response from the AI server 440. The database 450 may include multiple sub-databases (451 to 453). For example, the database 450 may include a first database 451 that stores text such as a syllables and a word, a second database 452 that stores a voice, and a third database 453 that stores various learning models.

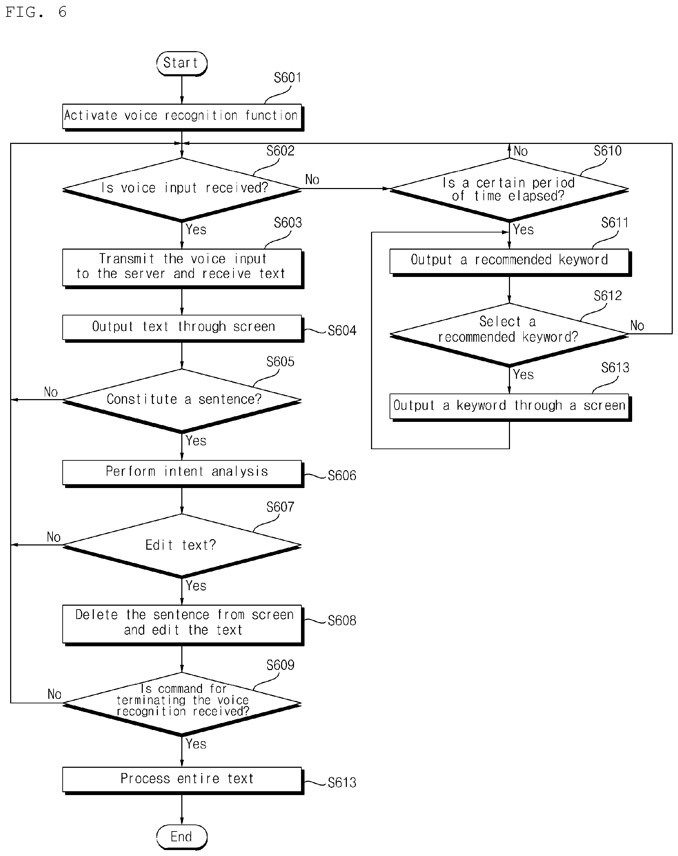

FIG. 6 is a flowchart illustrating an operating method of an image display apparatus according to an embodiment of the present disclosure.

Referring to FIG. 6, the image display apparatus 100 may activate a function (hereinafter, "voice recognition function") for receiving voice input, at operation S601. The image display apparatus 100 may activate the voice recognition function, on the basis of receiving a command (hereinafter, "start command" for activating the voice recognition function from the remote control device 200. For example, when a user presses a specific button included in the remote control device 200, the remote control device 200 may transmit a start command to the image display apparatus 100. Meanwhile, if the voice recognition function of the image display apparatus 100 is activated, the remote control device 200 may activate the microphone included in the user input unit 230.

If the voice recognition function is activated, the image display apparatus 100 may output a predetermined screen corresponding to the voice recognition function through the display 180. At this time, the predetermined screen may include at least one object corresponding to the voice recognition function. For example, the predetermined screen may include an object (hereinafter, referred to as a termination object) corresponding to the termination of the voice recognition function.

At operation S602, the image display apparatus 100 may determine whether a voice input is received. For example, if a user's voice is input to the remote control device 200 through the microphone included in the remote control device 200, the remote control device 200 may store data for the user's voice input.

The image display apparatus 100 may transmit the voice input to the server 400, at operation S603. Furthermore, the image display apparatus 100 may receive text corresponding to the voice input from the server 400. For example, when the image display apparatus 100 transmits voice data to the server 400, the STT server 420 may convert the voice data into text data and transmit it to the image display apparatus 100.

According to an embodiment, the image display apparatus 100 may transmit voice data in a preset unit, such as syllable or word, to the server 400. That is, when a user utters a sentence, the image display apparatus 100 transmits voice data in a preset unit to the server 400, while receiving voice input corresponding to the sentence from the remote control device 200, and may receive text data in a preset unit from the server 400.

The image display apparatus 100 may output text corresponding to the voice input through the display 180, at operation S604. The image display apparatus 100 may display text corresponding to the voice input through a predetermined screen corresponding to the voice recognition function output through the display 180.

The image display apparatus 100 may determine whether the voice input received from the remote control device 200 corresponds to a sentence, at operation S605. For example, if a preset minimum time has elapsed after the voice input is received from the remote control device 200, the image display apparatus 100 may determine that the voice input received from the remote control device 200 constitutes a sentence. For example, if a preset word is included in the text corresponding to the voice input, the image display apparatus 100 may determine that the voice input received from the remote control device 200 constitutes a sentence. Here, the preset word may include a conjunction (e.g., and, so, but, then) which is an element that receives a word, phrase, or sentence and connects it to the following word, phrase, or sentence, a meaningless word (e.g., expletive) located in the middle or at the end of a sentence, and the like.

At operation S606, if the voice input corresponds to a sentence, the image display apparatus 100 may perform intent analysis on the voice input. For example, the image display apparatus 100 may transmit text corresponding to the voice input to the NLP server 420 via the relay server 410. For example, if the relay server 410 stores text corresponding to the voice input converted by the STT server 420, the image display apparatus 100 may request the server 400 to perform the intent analysis on the text corresponding to the voice input stored in the relay server 410.

In the present disclosure, the image display apparatus 100 is described as determining whether the voice input corresponds to a sentence, but this is not limited thereto. For example, the relay server 410 may determine whether the voice input received from the image display apparatus 100 corresponds to a sentence. In addition, the relay server 410 may transmit text corresponding to the voice input stored in the relay server 410 to the NLP server 420.

At operation S607, the image display apparatus 100 may determine whether the voice input is an input for editing existing text, on the basis of the intent analysis information received from the NLP server 430. For example, the image display apparatus 100 may determine whether the intent analysis information received from the NLP server 430 includes an editing type corresponding to the voice input. Here, the editing type may include insertion, deletion, modification, or replacement of text.

At operation S608, if the voice input is an input for editing text, the image display apparatus 100 may delete the text corresponding to the voice input for editing text from a predetermined screen. Furthermore, the image display apparatus 100 may edit the existing text displayed on a predetermined screen, based on the voice input for editing text. For example, the intent analysis information received from the NLP server 430 may include a keyword included in the voice input, a sentence element corresponding to the keyword, and an editing type corresponding to the voice input. At this time, the image display apparatus 100 may edit text displayed on a predetermined screen, based on the keyword, sentence element, and editing type included in the intent analysis information.

At operation S609, the image display apparatus 100 may determine whether a command (hereinafter, "termination command") for terminating the voice recognition function is received. For example, when receiving an input selecting a termination object displayed on the predetermined screen from the remote control device 200, the image display apparatus 100 may determine that the termination command is received.

According to an embodiment, if a start command is received again before the termination command is received, the image display apparatus 100 may initialize all text output on the predetermined screen before the start command is received again.

Meanwhile, at operation S610, if no voice input is received, the image display apparatus 100 may determine whether a certain period of time is elapsed after the voice input is received. Here, the certain period of time may exceed a preset minimum time.

At operation S611, if a certain period of time is elapsed after the voice input is received, the image display apparatus 100 may output at least one keyword (hereinafter, "recommended keyword") related to the voice input through a predetermined screen. The image display apparatus 100 may output an object (hereinafter, "recommended object") corresponding to the recommended keyword through a predetermined screen.

For example, if a certain period of time is elapsed after a first voice input is received, the image display apparatus 100 may request a recommended keyword for the first voice input, to the server 400. At this time, the image display apparatus 100 may transmit text corresponding to the first voice input to the server 400. The server 400 may transmit the related keyword for a keyword included in the text corresponding to the first voice input received from the image display apparatus 100, to the image display apparatus 100 as a recommended keyword. Meanwhile, the server 400 may also transmit the recommended keyword for the first voice input to the image display apparatus 100, when a certain period of time is elapsed after the first voice input is received.

At operation S612, the image display apparatus 100 may determine whether an input for selecting a recommended keyword displayed on a predetermined screen is received from the remote control device 200. For example, the image display apparatus 100 may determine whether an input for selecting an object is received from the remote control device 200, while the coordinate of the pointer 205 corresponds to the recommended object.

At operation S613, if a recommended keyword is selected, the image display apparatus 100 may output text corresponding to the selected recommended keyword. Meanwhile, when a first recommended keyword is selected, the image display apparatus 100 may output at least one second recommended keyword related to the selected first recommended keyword.

Meanwhile, at operation S613, when a termination command is received, the image display apparatus 100 may process the entire text output through a predetermined screen. In this disclosure, it is described as an example that the entire text output through a predetermined screen is processed as an input for a service utilizing interactive artificial intelligence.

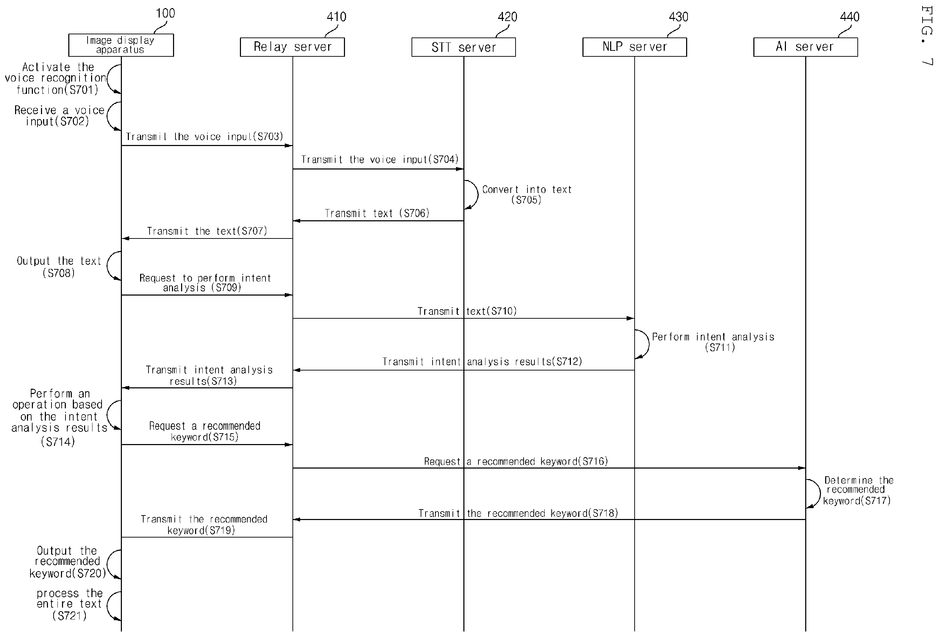

FIG. 7 is a flowchart illustrating a method of operating a system, according to an embodiment of the present disclosure. Detailed description of content overlapping with that described in FIG. 6 will be omitted.

Referring to FIG. 7, the image display apparatus 100 may activate a voice recognition function, at operation S701. For example, the image display apparatus 100 may activate the voice recognition function, based on the reception of the start command from the remote control device 200.

The image display apparatus 100 may receive a voice input, at operation S702. For example, the image display apparatus 100 may receive data for the user's voice input through a microphone included in the remote control device 200 from the remote control device 200.

The image display apparatus 100 may transmit the received voice input to the relay server 410, at operation S703. For example, while receiving the voice input, the image display apparatus 100 may transmit voice data in a preset unit, such as a syllable or a word, to the relay server 410.

The relay server 410 may transmit the voice input received from the image display apparatus 100 to the STT server 420, at operation S704.

The STT server 430 may convert the voice input received from the relay server 410 into text, at operation S705.

The STT server 430 may transmit text corresponding to the voice input to the relay server 410, at operation S706.

The relay server 410 may transmit the text received from the STT server 420 to the image display apparatus 100, at operation S707. According to an embodiment, the relay server 410 may store the text received from the STT server 420.

The image display apparatus 100 may output the text corresponding to the voice input received from the relay server 410 through a predetermined screen, at operation S708.

At operation S709, if the voice input corresponds to a sentence, the image display apparatus 100 may request the relay server 410 to perform intent analysis on the voice input. For example, if the relay server 410 stores text corresponding to the voice input converted by the STT server 420, the image display apparatus 100 may request intent analysis on the text corresponding to the voice input stored in the relay server 410. For example, if the relay server 410 does not store text corresponding to the voice input converted by the STT server 420, the image display apparatus 100 may transmit the text corresponding to the voice input to the relay server 410.

The relay server 410 may transmit text corresponding to the voice input to the NLP server 430, at operation S710.

The NLP server 430 may perform intent analysis on the text corresponding to the voice input, at operation S711. For example, the NLP server 430 may determine keywords included in the voice input, sentence element of the keywords, and the intent of the sentence, through intent analysis of the voice input. In this case, if the intent of the sentence is to edit existing text, the NLP server 430 may determine the editing type corresponding to the voice input.

The NLP server 430 may transmit intent analysis results including intent analysis information to the relay server 410, at operation S712.

The relay server 410 may transmit the intent analysis results received from the NLP server 430 to the image display apparatus 100, at operation S713.

The image display apparatus 100 may perform an operation based on the intent analysis results, at operation S714. For example, if the voice input is not related to editing existing text, the image display apparatus 100 may maintain the text displayed on the predetermined screen. For example, if the voice input is related to editing existing text, the image display apparatus 100 may delete the text corresponding to the voice input related to editing text from the predetermined screen. Furthermore, the image display apparatus 100 may edit the existing text displayed on the predetermined screen, based on the voice input related to editing text.

Meanwhile, at operation S715, the image display apparatus 100 may request a recommended keyword, to the relay server 410. For example, after a certain period of time is elapsed after the first voice input is received, the image display apparatus 100 may request a recommended keyword for the first voice input, to the relay server 410. At this time, the image display apparatus 100 may transmit text corresponding to the first voice input to the relay server 410. Alternatively, if the text corresponding to the first voice input is stored in the relay server 410, the image display apparatus 100 may omit transmitting the text corresponding to the first voice input for the relay server 410.

The relay server 410 may request a recommended keyword to the AI server 440, at operation S716. For example, the relay server 410 may transmit text corresponding to the first voice input to the AI server 440. Meanwhile, the relay server 410 may request a recommended keyword by transmitting text corresponding to the first voice input, to the NLP server 430. At this time, the NLP server 430 may transmit the intent analysis result for the text corresponding to the first voice input, to the AI server 440.

The AI server 440 may determine the recommended keyword, at operation S717. For example, the AI server 440 may use data contained in the database 450 to determine the related keyword corresponding to the keyword included in the first voice input as a recommended keyword.

According to an embodiment, the AI server 440 may determine a recommended keyword, based on a preset pattern that constitutes a sentence. For example, if the received text corresponds to a sentence, the AI server 440 may determine the keyword for the subject of the next sentence related with the keyword in the sentence as a recommended keyword. For example, if the received text is an incomplete sentence including a subject, the AI server 440 may determine a keyword for an object related with the subject included in the text as a recommended keyword.

The AI server 440 may transmit the recommended keyword to the relay server 410, at operation S718.

The relay server 410 may transmit the recommended keyword received from the AI server 440 to the image display apparatus 100, at operation S719.

The image display apparatus 100 may output the recommended keyword, at operation S720. The image display apparatus 100 may output a recommended object corresponding to the recommended keyword on a predetermined screen.

Meanwhile, at operation S730, if a termination command is received, the image display apparatus 100 may process the entire text output on the predetermined screen. For example, the image display apparatus 100 may process the entire text output through a predetermined screen as an input for a service utilizing interactive artificial intelligence.

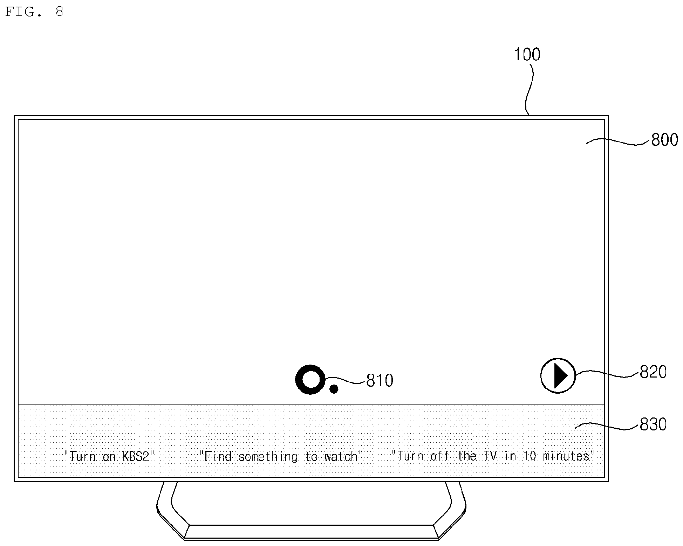

FIGS. 8 to 33 are diagrams for explaining the operation of the image display apparatus that composes text by using voice input, according to various embodiments of the present disclosure.

Referring to FIG. 8, the image display apparatus 100 may output a predetermined screen 800 corresponding to the voice recognition function, based on receiving a start command activating the voice recognition function from the remote control device 200. At this time, the microphone of the remote control device 200 may be activated to receive the voice input.

The predetermined screen 800 may include a first indicator 810 indicating a standby state for voice input, a termination object 820, and/or an example of voice input.

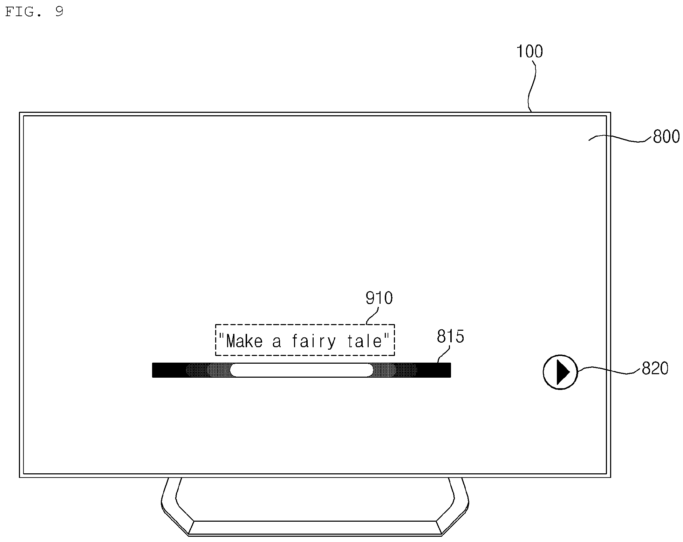

Referring to FIG. 9, when a user utters a first voice input, "Make a fairy tale," the remote control device 200 may transmit the first voice input received through the microphone to the image display apparatus 100.

The image display apparatus 100 may transmit the first voice input received from the remote control device 200 to the server 400. The image display apparatus 100 may output a text 910 corresponding to the first voice input through a predetermined screen 800, based on the text corresponding to the first voice input received from the server 400. According to an embodiment, the image display apparatus 100 may transmit the first voice input to the server 400 as voice data in a preset unit such as syllable and word. At this time, the image display apparatus 100 may sequentially output text corresponding to the voice data received from the server 400 through the predetermined screen 800.

While the image display apparatus 100 receives a first voice input from the remote control device 200, the image display apparatus 100 may change a first indicator 810 included in the predetermined screen 800 into a second indicator 815 indicating the reception state of the voice input.

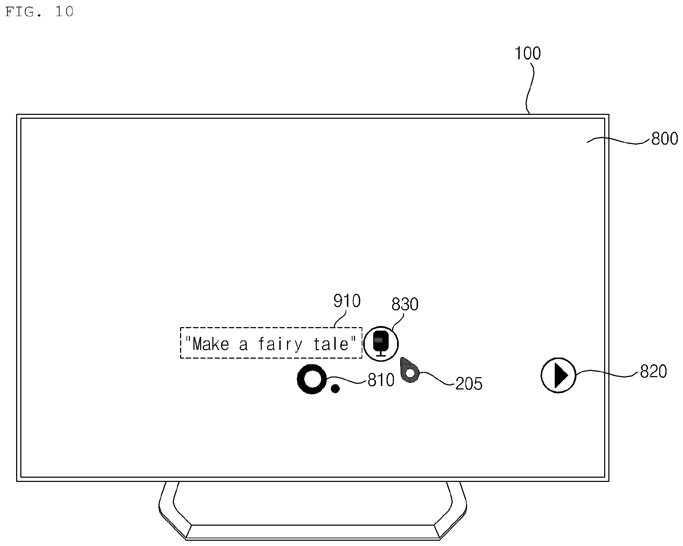

Referring to FIG. 10, upon completion of reception of the first voice input, the image display apparatus 100 may change the second indicator 815 included in the predetermined screen 800 back to the first indicator 810.

The image display apparatus 100 may request the server 400 to perform an intent analysis for the first voice input, "Make a fairy tale". At this time, since the first voice input, "Make a fairy tale" is not an input for editing existing text, the image display apparatus 100 may maintain the text 910 corresponding to the first voice input output through the predetermined screen 800. Meanwhile, the image display apparatus 100 may receive a keyword included in the first voice input, data for sentence element corresponding to the keyword, etc. from the server 400.

According to an embodiment, the image display apparatus 100 may output an object (hereinafter, "additional object") 830 corresponding to the additional reception of voice input through the predetermined screen 800. When determining that the first voice input corresponds to a sentence, the image display apparatus 100 may output the additional object 830 through the predetermined screen 800. When determining that the first voice input is not an input for editing existing text, the image display apparatus 100 may output the additional object 830 through the predetermined screen 800. Meanwhile, after the additional object 830 is displayed on the predetermined screen 800, until the image display apparatus 100 receives an input to select the additional object 830 from the remote control device 200, the microphone of the remote control device 200 may be deactivated.

Meanwhile, according to an embodiment, if the image display apparatus 100 does not receive an input to select the additional object 830 from the remote control device 200 for a certain period of time, while the additional object 830 is displayed on the predetermined screen 800, it may determine that a termination command is received.

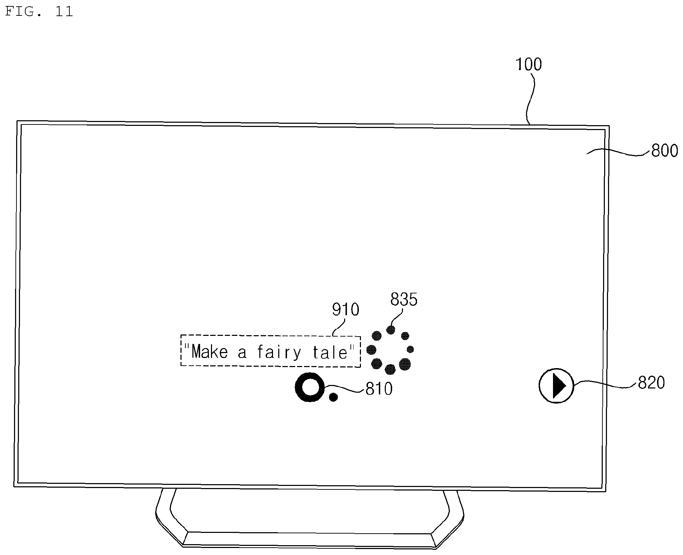

Referring to FIG. 11, when a user selects an additional object 830 by using the pointer 205 displayed on the predetermined screen 800, the microphone of the remote control device 200 may be activated. Meanwhile, when an input for selecting the additional object 830 is received from the remote control device 200, the image display apparatus 100 may output a third indicator 835 indicating that the image display apparatus 100 is receiving a voice input through the predetermined screen 800. For example, when a user selects the additional object 830 by using the pointer 205 displayed on the predetermined screen 800, the image display apparatus 100 may change the additional object 830 included in the predetermined screen 800 to the third indicator 835.

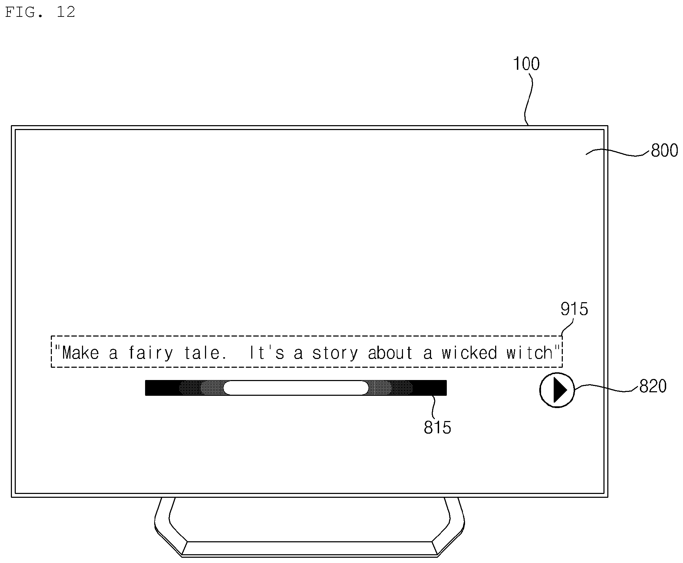

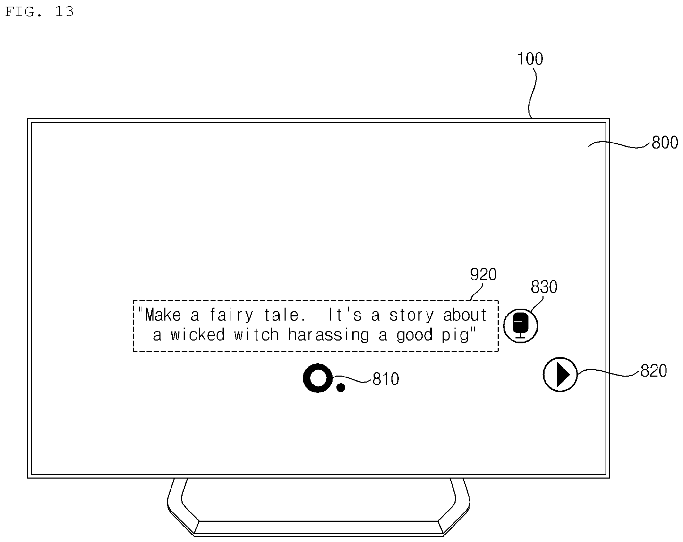

Referring to FIGS. 12 and 13, when a user utters a second voice input, "It' s a story about a wicked witch harassing a good pig" the remote control device 200 may transmit the second voice input received through the microphone to the image display apparatus 100. While the second voice input is being received from the remote control device 200, the image display apparatus 100 may display a second indicator 815 on the predetermined screen 800.

The image display apparatus 100 may transmit the second voice input to the server 400 as voice data in a preset unit such as syllable or word. At this time, the image display apparatus 100 may sequentially output text corresponding to the voice data received from the server 400 through the predetermined screen 800. Accordingly, while the second voice input is being received, the text 915 corresponding to a portion of the first and second voice inputs may be output on the predetermined screen 800.

Upon completion of receiving the second voice input, the image display apparatus 100 may output the text 920 corresponding to the first and second voice inputs through the predetermined screen 800.

The image display apparatus 100 may request the server 400 to perform intent analysis on the second voice input "It' s a story about a wicked witch harassing a good pig". Since the second voice input "It' s a story about a wicked witch harassing a good pig" is not an input related to editing existing text, the image display apparatus 100 may maintain the text 920 corresponding to the first and second voice inputs output through the predetermined screen 800. Meanwhile, the image display apparatus 100 may receive data for the keyword included in the second voice input, the sentence element corresponding to the keyword, and the like from the server 400.

Meanwhile, upon completion of receiving the second voice input, the image display apparatus 100 may display the first indicator 810 on the predetermined screen 800. Furthermore, since the second voice input corresponds to a sentence and is not an input for editing existing text, the additional object 830 may be displayed on the predetermined screen 800.

Meanwhile, according to an embodiment, the image display apparatus 100 may not use a user interface for the additional object 830. In this case, the microphone of the remote control device 200 may be activated, from the time a start command is received until a termination command is received. The following description will be based on an embodiment in which a user interface for the additional object 830 is not used.

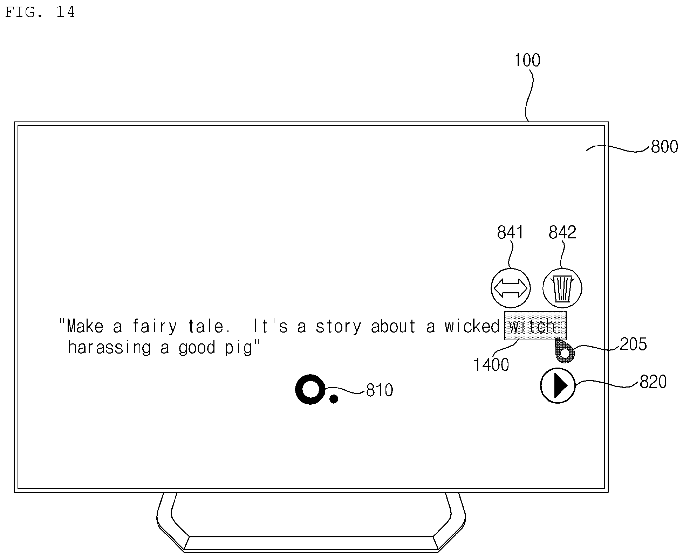

Referring to FIG. 14, when the pointer 205 indicates the text displayed on the predetermined screen 800, the image display apparatus 100 may determine a portion corresponding to the pointer 205 as an editing area 1400. At this time, the portion corresponding to the pointer 205 may be determined based on the part of speech such as noun, adjective, and verb and/or the sentence element such as subject, object, and modifier included in the text displayed on the predetermined screen 800. For example, when the coordinate of the pointer 205 correspond to "the witch" within the second voice input among the text displayed on the predetermined screen 800, the portion corresponding to "the witch" may be set as the editing area 1400.

Meanwhile, when the editing area 1400 is set, the image display apparatus 100 may display an object related to the editing for the editing area 1400 on the predetermined screen 800. The object related to the editing for the editing area 1400 may include the object 841 (hereinafter, "modification object") corresponding to text modification, the object 842 corresponding to text deletion (hereinafter, "deletion object"), etc.

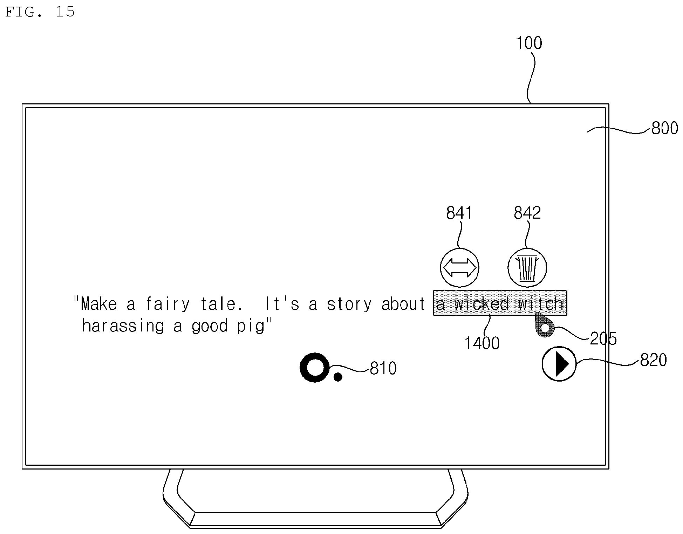

Referring to FIG. 15, the image display apparatus 100 may adjust a text portion corresponding to the editing area 1400. For example, the image display apparatus 100 may adjust a text portion corresponding to the editing area 1400, based on an input of operating a directional key received from the remote control device 200.

Meanwhile, according to an embodiment, the image display apparatus 100 may adjust a text portion corresponding to the editing area 1400 based on a change in the location of the pointer 205. For example, when an input for selecting the editing area 1400 is received through the remote control device 200, the image display apparatus 100 may enlarge or reduce a text portion corresponding to the editing area 1400 to the left, in response to a movement of the pointer 205 to the left.

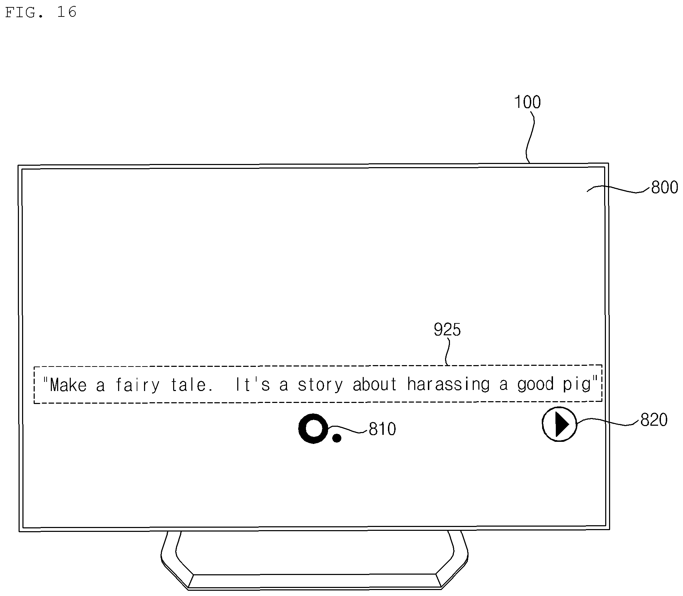

Referring to FIG. 16, when the text portion corresponding to 'a wicked witch' is set as the editing area 1400, a user may select the deletion object 842 by using the pointer 205 displayed on the predetermined screen 800. At this time, the image display apparatus 100 may display the text 925 in which 'a wicked witch' is deleted on the predetermined screen 800.

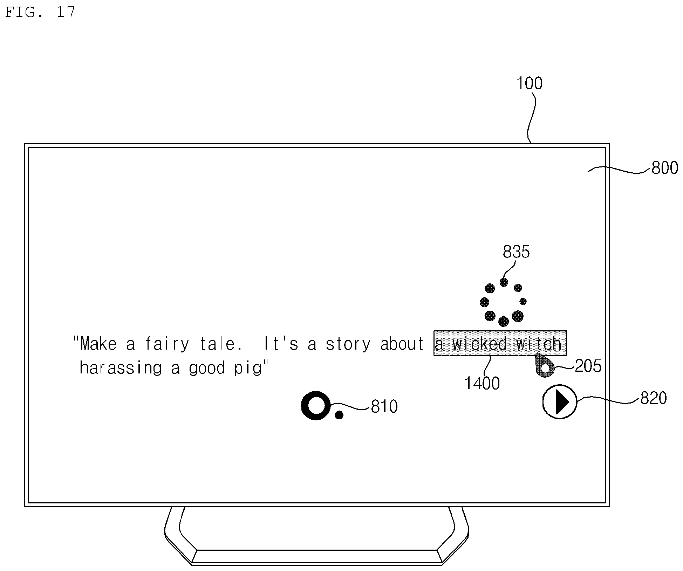

Meanwhile, referring to FIG. 17, when the text portion corresponding to 'a wicked witch' is set as the editing area 1400, a user may select the modification object 841 by using the pointer 205 displayed on the predetermined screen 800. At this time, the image display apparatus 100 may output a third indicator 835 indicating that the image display apparatus 100 is receiving a voice input through the predetermined screen 800. For example, when a user selects the additional object 830 by using the pointer 205 displayed on the predetermined screen 800, the image display apparatus 100 may change the object related to editing included in the predetermined screen 800 to the third indicator 835.

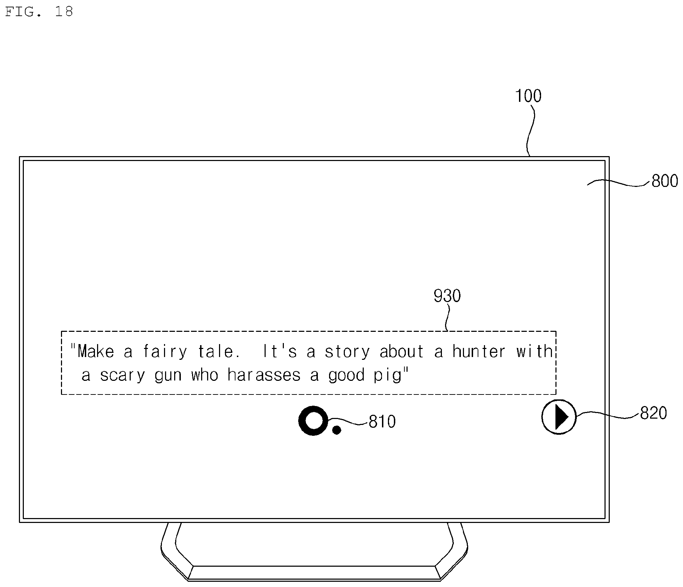

Referring to FIG. 18, when a user utters a third voice input, "a hunter with a scary gun" the remote control device 200 may transmit the third voice input received through the microphone to the image display apparatus 100. The image display apparatus 100 may transmit the third voice input received from the remote control device 200 to the server 400. The image display apparatus 100 may output the text corresponding to the voice data received from the server 400 through the predetermined screen 800. At this time, the predetermined screen 800 may display the text 930 in which "a wicked witch" is changed to "a hunter with a scary gun"

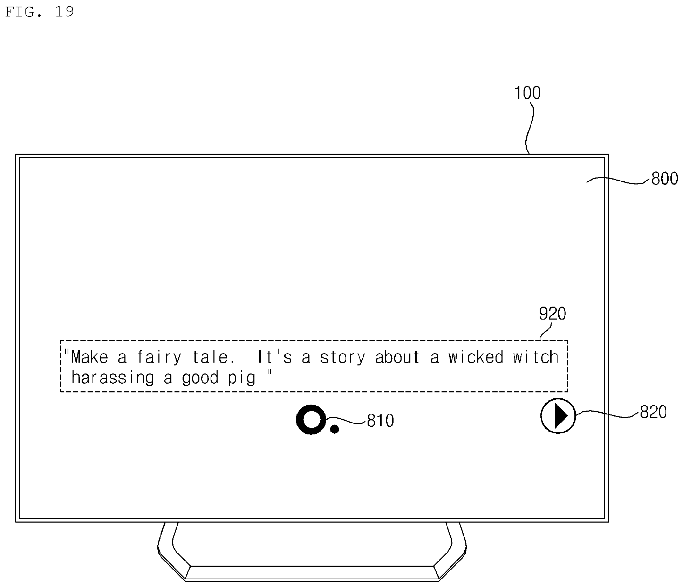

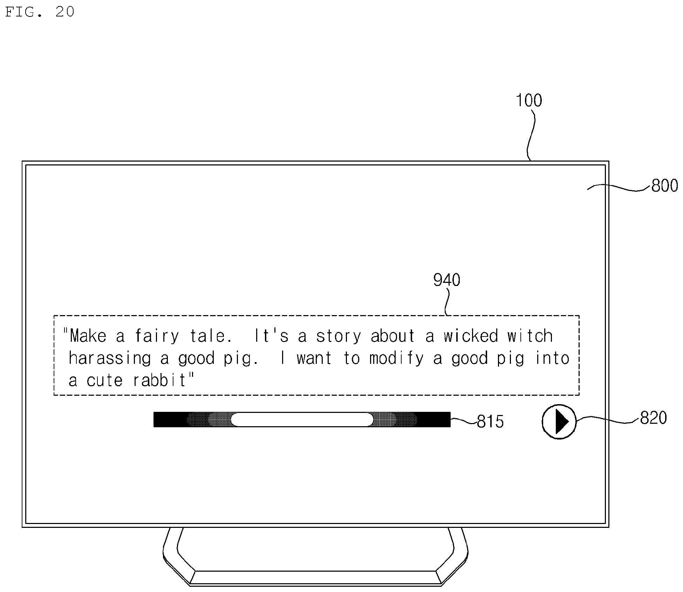

Meanwhile, referring to FIGS. 19 and 20, when a user utters a fourth voice input "I want to modify a good pig into a cute rabbit", while the text 920 corresponding to the first and second voice inputs is displayed on the predetermined screen 800, the remote control device 200 may transmit the fourth voice input received through the microphone to the image display apparatus 100. The image display apparatus 100 may transmit the fourth voice input to the STT server 420 and receive the text corresponding to the fourth voice input. Based on the text corresponding to the fourth voice input, the image display apparatus 100 may output the text 940 corresponding to the first, second, and fourth voice inputs through the predetermined screen 800.

The image display apparatus 100 may request intent analysis for the fourth voice input, to the server 400. The NLP server 430 may perform intent analysis on the fourth voice input. At this time, the NLP server 430 may determine, based on "want to modify" included in the fourth voice input, that the intent of the sentence corresponding to the fourth voice input is to edit existing text. Furthermore, the NLP server may determine the type of editing as text replacement, determine the keyword before replacement as 'good pig' and determine the keyword after replacement as "cute rabbit," and determine that both keywords are a noun phrase.

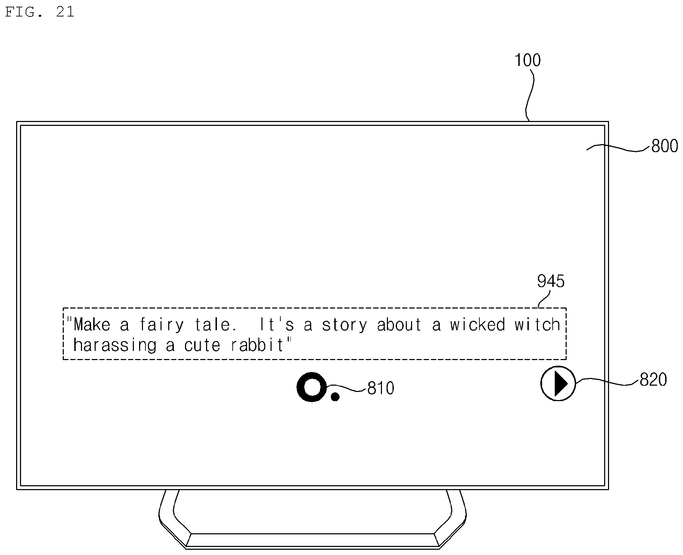

Referring to FIG. 21, the image display apparatus 100 may determine, based on intent analysis information received from the server 400, that the fourth voice input is an input related to the text editing. At this time, the image display apparatus 100 may delete the text corresponding to the fourth voice input, "I want to modify 'good pig' to 'cute rabbit'" from the predetermined screen 800.

The image display apparatus 100 may display the text 945 that changes 'good pig' to 'cute rabbit' in the text 920 corresponding to the first and second voice inputs, on a predetermined screen 800, based on the keyword included in the intent analysis information received from the server 400.

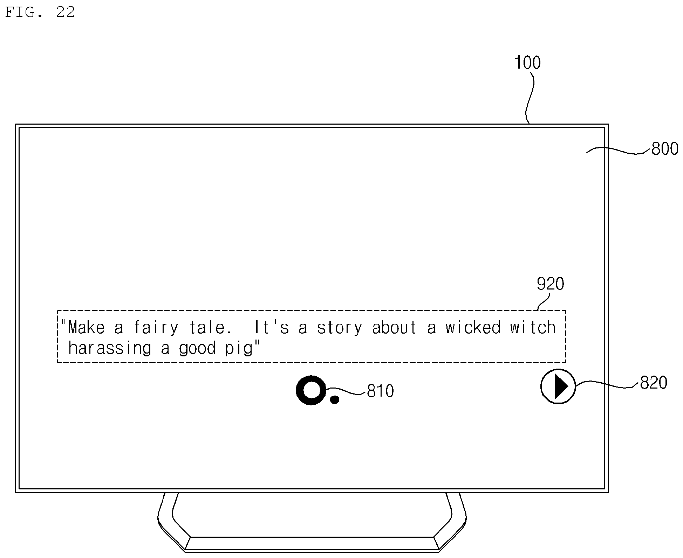

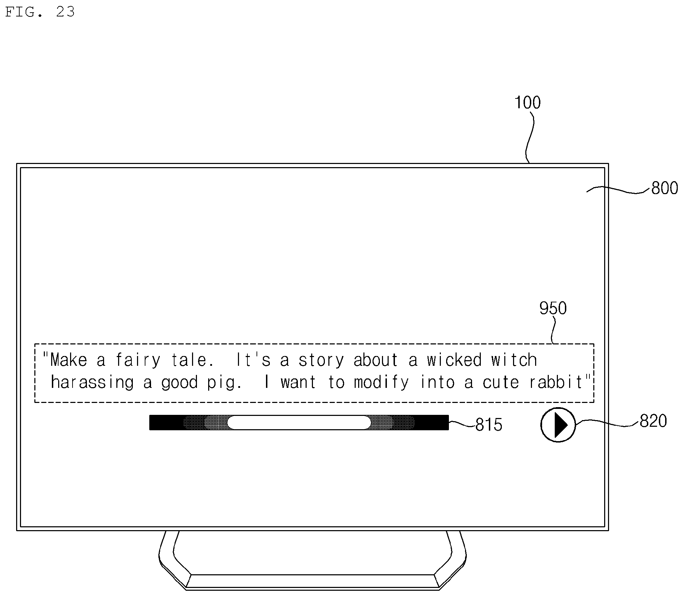

Meanwhile, referring to FIGS. 22 and 23, when the text 920 corresponding to the first and second voice inputs is displayed on the predetermined screen 800, if a user utters a fifth voice input, "I want to modify into a cute rabbit", the remote control device 200 may transmit the fifth voice input received through the microphone to the image display apparatus 100. The image display apparatus 100 may transmit the fifth voice input to the STT server 420, and receive the text corresponding to the fifth voice input. The image display apparatus 100 may output the text 950 corresponding to the first voice input, the second voice input, and the fifth voice input through the predetermined screen 800, based on the text corresponding to the fifth voice input.

The image display apparatus 100 may request the intent analysis of the fifth voice input, to the server 400. The NLP server 430 may perform intent analysis on the fifth voice input. At this time, the NLP server 430 may determine, based on "want to modify" included in the fifth voice input, that the intent of the sentence corresponding to the fifth voice input is to edit existing text. Furthermore, the NLP server may determine the keyword after editing as "cute rabbit," determine that the keyword is a noun phrase composed of an adjective and a noun, and determine the type of editing as text replacement.

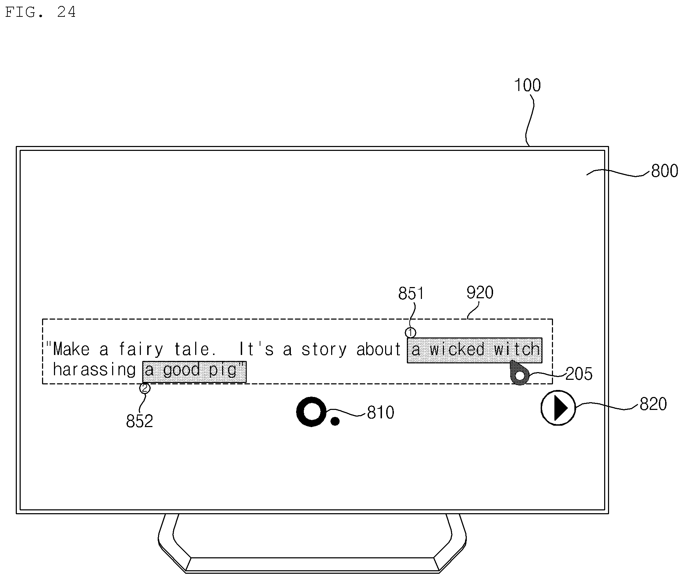

Referring to FIG. 24, the image display apparatus 100 may determine, based on the intent analysis information received from the server 400, that the fifth voice input is an input related to editing text. At this time, the image display apparatus 100 may delete the text corresponding to the fifth voice input, "I want to modify into a cute rabbit" from the predetermined screen 800.

Meanwhile, the image display apparatus 100 may check that the noun phrase "cute rabbit" is the keyword after editing, based on the keywords included in the intent analysis information received from the server 400. At this time, on the basis that "cute rabbit" is a noun phrase composed of an adjective and a noun, the image display apparatus 100 may determine 'wicked witch' and 'nice pig' composed of adjective and noun in the text 920 corresponding to the first voice input and the second voice input as a keyword before editing.

On the basis that there are multiple keywords before editing, the image display apparatus 100 may display a fourth indicator 851, 852 indicating the keyword before editing on the predetermined screen. The fourth indicator 851, 852 may be displayed adjacent to a text portion determined as a keyword before editing. In addition, the image display apparatus 100 may display a portion determined as a keyword before editing as an editing area. A user may select one of the fourth indicators 851, 852 indicating a keyword before editing by using the pointer 205 displayed on the predetermined screen 800, while 'wicked witch' and 'good pig' are determined as a keyword before editing. Alternatively, a user may select one of the portions determined as a keyword before editing displayed as an editing area, by using the pointer 205 displayed on the predetermined screen 800.

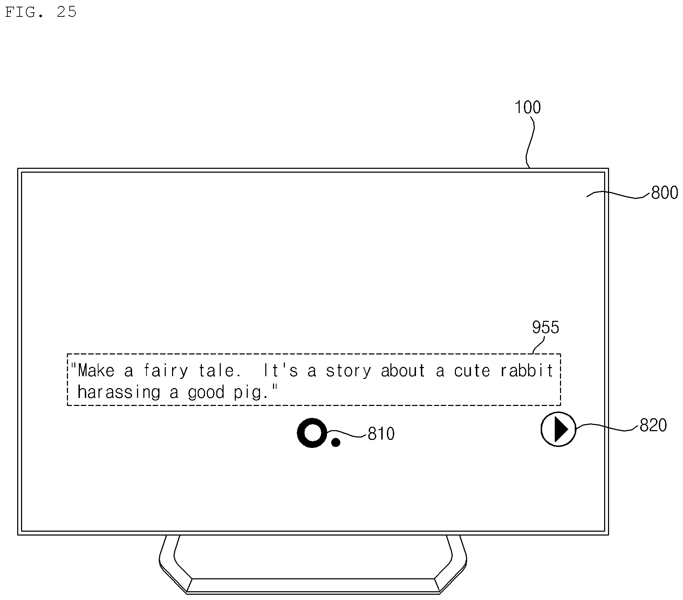

Referring to FIG. 25, if a user selects 'wicked witch' among 'wicked witch' and 'good pig' determined as the keyword before editing, the image display apparatus 100 may display the text 955 in which 'wicked witch' is modified to 'cute rabbit' among the text 920 corresponding to the first voice input and the second voice input, on the predetermined screen 800.

Meanwhile, according to an embodiment, a user may edit one area of the text output through the predetermined screen 800 by using a voice input. For example, if a user utters "I want to delete from 'It' to 'good pig'", the NLP server 430 may determine that the intent of the sentence is to edit the existing text on the basis of "I want to delete" included in the voice input. Furthermore, the NLP server may determine the editing type as text deletion, and determine 'It' and 'good pig' as a keyword indicating the deletion range. In addition, the image display apparatus 100 may display, on the predetermined screen 800, the deleted text from 'It' to 'good pig' in the text 920 corresponding to the first voice input and the second voice input, based on the keyword included in the intent analysis information received from the server 400.

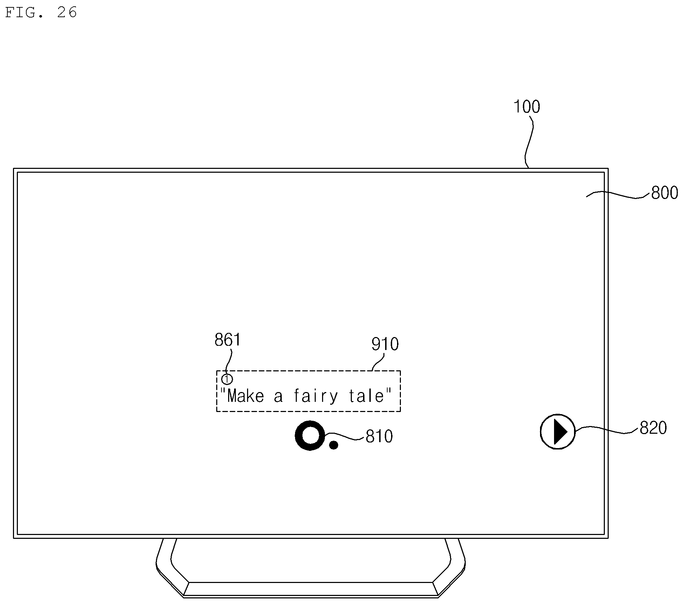

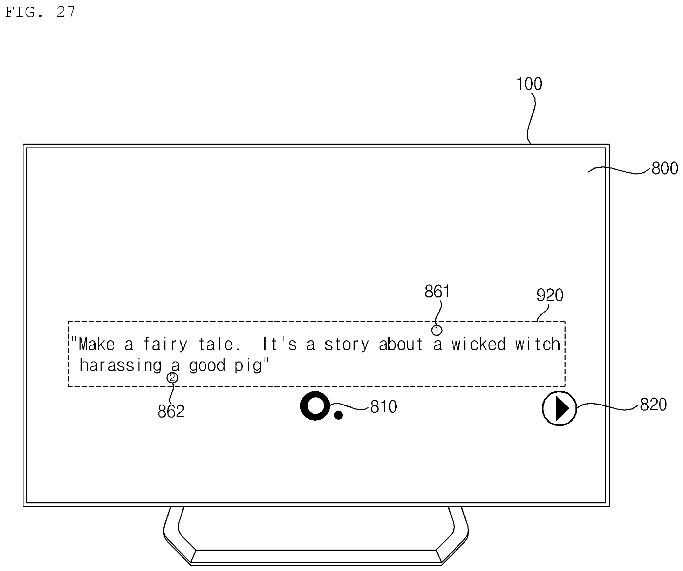

Meanwhile, referring to FIGS. 26 and 27, when a user utters the first voice input, "Make a fairy tale," the image display apparatus 100 may display the text 810 corresponding to the first voice input on the predetermined screen 800. At this time, if it is determined that the first voice input corresponds to a sentence rather than an input for editing an existing text, the image display apparatus 100 may display a fifth indicator 861 indicating the sentence on the predetermined screen 800. The fifth indicator 861 corresponding to the first voice input may be arranged adjacent to a text portion corresponding to the first voice input.

In addition, when a user utters the second voice input "It's a story about a wicked witch harassing a good pig", the image display apparatus 100 may display the text 820 corresponding to the first voice input and the second voice input on the predetermined screen 800. At this time, if it is determined that the second voice input corresponds to a sentence rather than an input for editing an existing text, the image display apparatus 100 may display a fifth indicator 862 indicating the sentence on the predetermined screen 800. The fifth indicator 862 corresponding to the second voice input may be arranged adjacent to a text portion corresponding to the second voice input.

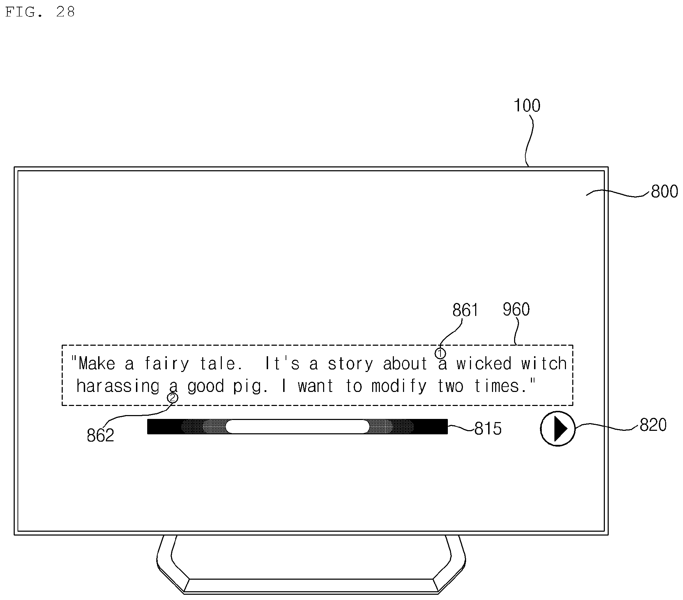

Referring to FIG. 28, when the fifth indicator 861, 862 is displayed on the predetermined screen 800, if a user utters a sixth voice input "I want to modify two times", the remote control device 200 may transmit the sixth voice input received through the microphone to the image display apparatus 100. The image display apparatus 100 may transmit the sixth voice input to the STT server 420, and receive a text corresponding to the sixth voice input. Based on the text corresponding to the sixth voice input, the image display apparatus 100 may output the text 960 corresponding to the first voice input, the second voice input, and the sixth voice input through the predetermined screen 800.

The image display apparatus 100 may request the server 400 to perform an intent analysis on the sixth voice input. The NLP server 430 may perform intent analysis on the sixth voice input. At this time, the NLP server 430 may determine, based on "want to modify" included in the sixth voice input, that the intent of the sentence corresponding to the fourth voice input is to edit existing text. Furthermore, the NLP server may determine the editing type as a text modification, and determine the keyword to be edited as "two times"

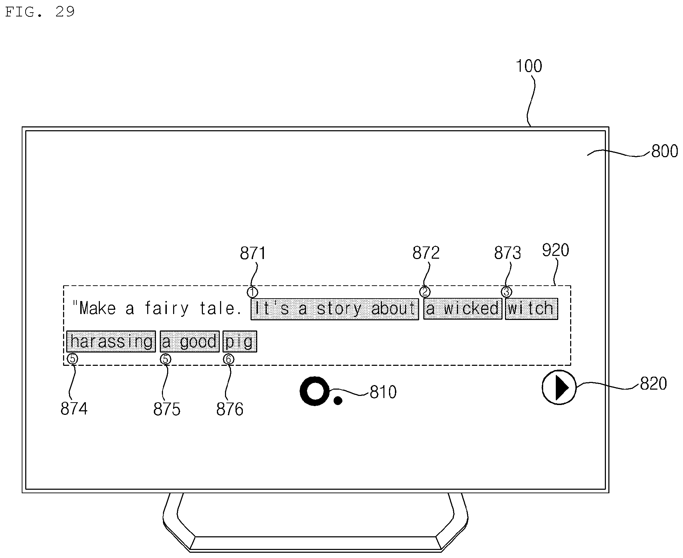

Referring to FIG. 29, the image display apparatus 100 may determine, based on intent analysis information received from the server 400, that the sixth voice input is an input related to text editing. At this time, the image display apparatus 100 may delete the text corresponding to the sixth voice input "I want to modify two times" from the predetermined screen 800.

The image display apparatus 100 may determine, based on the keyword included in the intent analysis information received from the server 400, that the fifth indicator 862 corresponding to the second voice input is selected from among the fifth indicators 861, 862.

The image display apparatus 100 may display, on a predetermined screen 800, sixth indicators 871 to 876 indicating sentence element constituting a sentence corresponding to the second voice input, based on the selection of the fifth indicator 862 corresponding to the second voice input. Each of the sixth indicators 871 to 876 may be arranged adjacent to the sentence element constituting a sentence corresponding to the second voice input.

When a user selects one of the sixth indicators 871 to 876 by using the pointer 205 displayed on the predetermined screen 800 or using the voice input, the image display apparatus 100 may perform editing on the sentence element corresponding to the selected sixth indicator. For example, the image display apparatus 100 may output the modification object 841, the deletion object 842, etc., to be adjacent to the sentence element corresponding to the selected sixth indicator.

Meanwhile, according to an embodiment, the image display apparatus 100 may also perform editing on the sentence corresponding to the selected fifth indicator, based on the selection of one of the fifth indicators 861, 862. For example, the image display apparatus 100 may output the modification object 841, the deletion object 842, etc., to be adjacent to the sentence corresponding to the selected fifth indicator.

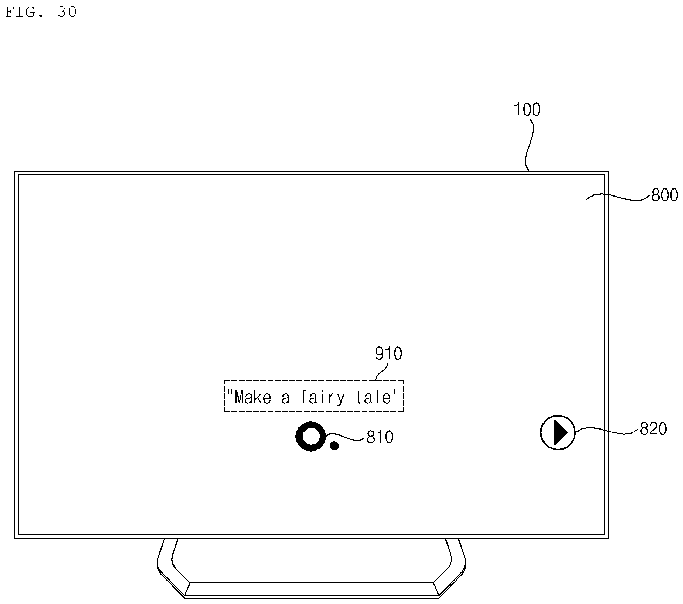

Meanwhile, referring to FIG. 30, the image display apparatus 100 may display the text 910 corresponding to the first voice input through the predetermined screen 800, based on the reception of the first voice input "Make a fairy tale". The image display apparatus 100 may determine whether a certain period of time is elapsed after the first voice input is received. If the certain period of time is elapsed after the first voice input is received, the image display apparatus 100 may request a recommended keyword for the first voice input, to the server 400.

The NLP server 430 may perform intent analysis on the text corresponding to the first voice input. At this time, the NLP server 430 may determine that the intent of the sentence corresponding to the first voice input is that a user is requesting the creation of a piece of writing whose genre is a fairy tale, based on "fairy tale" and "make" included in the first voice input.

Based on the intent analysis results received from the NLP server 430, the AI server 440 may determine the related keyword corresponding to the keyword "fairy tale" included in the first voice input as a recommended keyword. For example, the AI server 440 may use a database corresponding to "fairy tale" among multiple databases 450. In this case, the AI server 440 may determine the recommended keyword by using a preset pattern that constitutes a sentence. For example, on the basis that the intent of the sentence corresponding to the first voice input is the creation of a text, the AI server 440 may determine the related keyword for the background of "fairy tale" such as "in the forest" "at the sea" and "in the castle" as a recommended keyword.

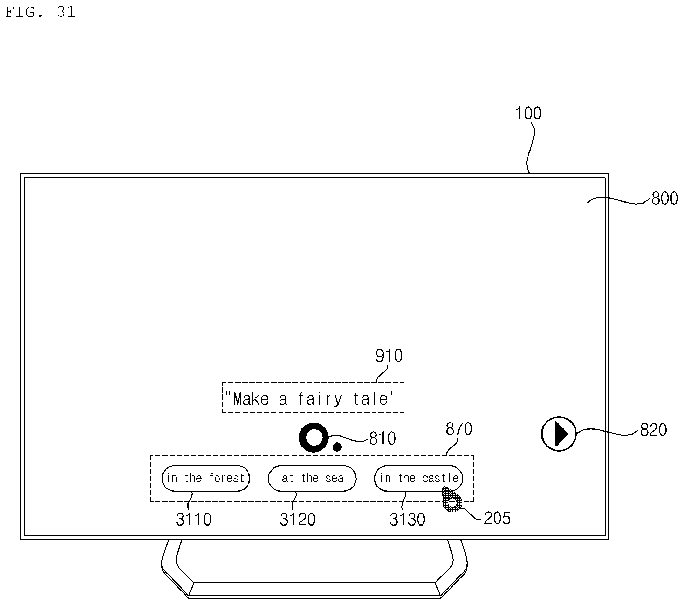

Referring to FIG. 31, the image display apparatus 100 may output the recommended keyword for the first voice input received from the server 400 through the predetermined screen 800. At this time, the image display apparatus 100 may output the recommended object 3110, 3120, 3130 corresponding to the recommended keyword received from the server 400 through a certain area 870 of the predetermined screen 800. A user may select one of the recommended objects 3110, 3120, 3130 by using the pointer 205 displayed on the predetermined screen 800.

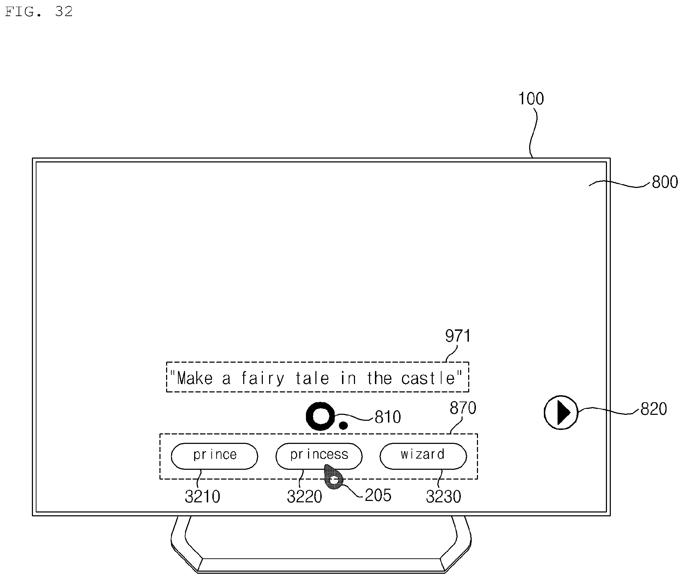

Referring to FIG. 32, when a user selects an object 3130 corresponding to 'in the castle' among the recommended objects 3110, 3120, 3130, the image display apparatus 100 may display a text 971 corresponding to the first voice input and the recommended keyword 'in the castle' on the predetermined screen 800.

Meanwhile, the image display apparatus 100 may request the server 400 again for a recommended keyword for the first voice input and "in the castle". The NLP server 430 may perform intent analysis on the text 971 corresponding to the first voice input and "in the castle". At this time, the NLP server 430 may determine that the intent of the sentence corresponding to the first voice input is that a user is requesting the creation of a piece of writing whose genre is a fairy tale, and that "in the castle" is an adverbial phrase corresponding to the background of the writing.

Based on the intent analysis results received from the NLP server 430, the AI server 440 may determine the related keyword corresponding to the keyword 'fairy tale' included in the first voice input and the background of the text 'castle' as a recommended keyword. At this time, the AI server 440 may determine a recommended keyword by using a preset pattern that constitutes a sentence. For example, on the basis that the genre of the writing is "fairy tale" and the background is "castle", the AI server 440 may determine "prince", "princess", and "wizard" which are related keywords for the subject related to the "castle" which is the background of the "fairy tale" as a recommended keyword.

The image display apparatus 100 may output the recommended keyword for the first voice input received from the server 400 and the phrase "in the castle" through the predetermined screen 800. At this time, the image display apparatus 100 may output the recommended object 3210, 3220, 3230 corresponding to the recommended keyword received from the server 400 through the certain area 870 of the predetermined screen 800. A user may select one of the recommended objects 3210, 3220, 3230 by using the pointer 205 displayed on the predetermined screen 800.

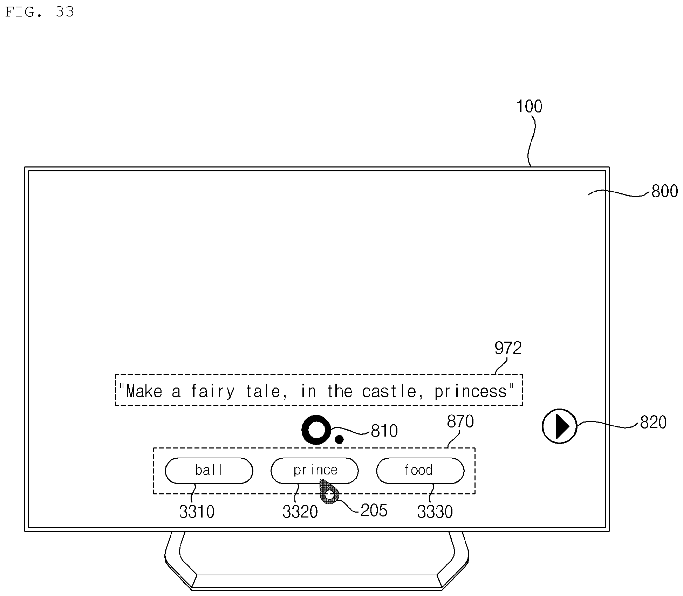

Referring to FIG. 33, if a user selects an object 3220 corresponding to 'princess' among the recommended objects 3210, 3220, 3230, the image display apparatus 100 may display a text 972 adding 'princess', on the predetermined screen 800.

Meanwhile, the image display apparatus 100 may again request the server 400 for the first voice input and the recommended keyword for 'in the castle' and 'princess'. The NLP server 430 may perform intent analysis on the text 972 adding 'princess'. At this time, the NLP server 430 may determine that the intent of the sentence corresponding to the first voice input is that a user requests the creation of a piece of writing whose genre is a fairy tale, determine that 'in the castle' is an adverbial phrase corresponding to the background of the writing, and determine that 'princess' is the subject of the sentence.

Based on the intent analysis result received from the NLP server 430, the AI server 440 may determine the related keyword corresponding to the keyword 'fairy tale' included in the first voice input, the background of the text 'castle', and the subject of the sentence 'princess' as a recommended keyword. At this time, the AI server 440 may determine the recommended keyword by using a preset pattern that constitutes a sentence. For example, on the basis that the genre of the writing is 'fairy tale', the background is 'castle', and the subject is 'princess', the AI server 440 may determine that the background of the 'fairy tale' is 'castle', and determine the related keyword, 'ball', 'prince', and 'food', for an object related to the subject 'princess' as a recommended keyword.

The image display apparatus 100 may output the first voice input received from the server 400 and the recommended keyword for "in the castle" and "princess" through the predetermined screen 800. At this time, the image display apparatus 100 may output the recommended object 3310, 3320, 3330 corresponding to the recommended keyword received from the server 400 through the certain area 870 of the predetermined screen 800. The user may select one of the recommended objects 3310, 3320, 3330 by using the pointer 205 displayed on the predetermined screen 800.

As described above, according to at least one embodiment of the present disclosure, a long text may be composed by using a user's voice input.

Furthermore, according to at least one embodiment of the present disclosure, a text may be edited by using a user's voice input.

Furthermore, according to at least one embodiment of the present disclosure, a keyword for sentence composition may be recommended by considering the context of the text.

Referring to FIGS. 1 to 33, an image display apparatus 100 according to an aspect of the present disclosure includes a display 180; an external apparatus interface unit 130 which communicates with a remote control device 200; a network interface unit 135 which communicates with at least one server 400; and a control unit 170, wherein the control unit 170, on the basis that a first command for activating a function of receiving a voice input from the remote control device 200 is received, outputs, through the display 180, a predetermined screen 800 including a first object 820 corresponding to a termination of the function, on the basis that the voice input is received from the remote control device 200, outputs, through the predetermined screen 800, a text corresponding to the voice input that is received from the remote control device 200, and on the basis that a second command for selecting the first object 820 is received, processes an entire text that is output through the predetermined screen 800.

In addition, according to an aspect of the present disclosure, the control unit 170, if a first voice input received from the remote control device 200 corresponds to a sentence, outputs a second object 830 corresponding to an additional receiving of voice input through the predetermined screen 800, and if a third command for selecting the second object 830 is received from the remote control device 200, additionally receives a second voice input from the remote control device 200.

In addition, according to an aspect of the present disclosure, if the first command is received again before the second command is received, the control unit 170 initializes the entire text output through the predetermined screen 800.

In addition, according to an aspect of the present disclosure, the control unit 170, if a first voice input corresponding to text editing is received from the remote control device 200, edits the text corresponding to a second voice input output through the predetermined screen 800 before the first voice input is received, by using at least one keyword included in the first voice input.

In addition, according to an aspect of the present disclosure, the control unit 170, on the basis that the first voice input is received from the remote control device 200, outputs a text corresponding to the first voice input through the predetermined screen 800, and, if it is determined that the first voice input corresponds to editing the text, removes the text corresponding to the first voice input from the predetermined screen 800.

In addition, according to an aspect of the present disclosure, the control unit 170, if the keyword is included in the text corresponding to the second voice input, edits the text corresponding to the second voice input, based on the keyword, and, if the keyword is not included in the text corresponding to the second voice input, edits the text corresponding to the second voice input, based on a sentence element corresponding to the keyword.

In addition, according to an aspect of the present disclosure, the control unit 170, if a certain time is elapsed after a certain voice input is received, requests the server 400 to transmit at least one first keyword related with the certain voice input, outputs the at least one first keyword received from the server 400 through the predetermined screen 800, and if a third command for selecting one of the at least one first keyword is received from the remote control device 200, requests the server 400 to transmit at least one second keyword related with the certain voice input and the selected first keyword.

In addition, according to an aspect of the present disclosure, the control unit 170, if the text corresponding to the voice input constitutes a sentence, outputs a first indicator indicating a sentence to be adjacent to the constituted sentence through the predetermined screen 800, and edits a certain sentence corresponding to the selected first indicator, on the basis that an input for selecting the first indicator is received from the remote control device 200.

In addition, according to an aspect of the present disclosure, the control unit 170 outputs a second indicator indicating a sentence element constituting the certain sentence to be adjacent to the sentence element, on the basis that an input for selecting the first indicator is received from the remote control device 200.

A system 10 according to an aspect of the present disclosure includes an image display apparatus 100, a remote control device 200, and at least one server 400, wherein the remote control device 200 transmits a first command that activates a function of receiving a voice input to the image display apparatus 100, and transmits a voice input received through a microphone to the image display apparatus 100 while the function is activated, wherein the image display apparatus 100 outputs a predetermined screen 800 including a first object 820 corresponding to a termination of the function, on the basis that the first command is received from the remote control device 200, transmits the voice input received from the remote control device 200 to the server 400, outputs a text corresponding to the voice input received from the server 400 through the predetermined screen 800, and processes an entire text output through the predetermined screen 800, on the basis that a second command for selecting the first object 820 is received.

In addition, according to an aspect of the present disclosure, the server 400 includes: a first server 420 which converts a voice into a text; a second server 430 which processes a text; and a third server 410 which transmits data between the first server 420, the second server 430, and the image display apparatus 100, wherein if a text corresponding to a voice input received from the image display apparatus 100 corresponds to a sentence, any one of the first server 420 and the third server 410 transmits the text corresponding to the voice input to the second server 430, and the second server 430 performs an intent analysis on the text corresponding to the voice input.

In addition, according to an aspect of the present disclosure, the second server 430, if the text corresponding to the voice input does not correspond to editing of text, transmits a keyword included in the voice input and a sentence element corresponding to the keyword to the image display apparatus 100, and if the text corresponding to the voice input corresponds to the editing of text, transmits an editing type corresponding to the voice input and an editing-related keyword to the image display apparatus 100, wherein the image display apparatus 100 outputs a text corresponding to the first voice input through the predetermined screen 800, while the first voice input is received from the remote control device 200, if the first voice input corresponds to the editing of text, removes the text corresponding to the first voice input from the predetermined screen 800, and edits a text corresponding to a second voice input output through the predetermined screen 800 before the first voice input is received, by using the editing-related keyword according to an editing type corresponding to the first voice input.

In addition, according to an aspect of the present disclosure, the image display apparatus 100, when a certain time is elapsed after receiving a certain voice input, requests the server 400 to transmit at least one first keyword related with the certain voice input, outputs the at least one first keyword received from the server 400 through the predetermined screen 800, and when a third command for selecting one of the at least one first keyword is received from the remote control device 200, requests the server 400 to transmit at least one second keyword related with the certain voice input and the selected first keyword.

In addition, according to an aspect of the present disclosure, the server 400 determines a database corresponding to a keyword included in the first voice input from among a plurality of databases, determines the at least one first keyword, based on data for a first sentence element in the database, and determines the at least one second keyword, based on data for a second sentence element different from the first sentence element in the database.

In addition, according to an aspect of the present disclosure, the image display apparatus 100, when the text corresponding to the voice input constitutes a sentence, outputs a first indicator indicating a sentence to be adjacent to the constituted sentence through the predetermined screen 800, and on the basis that an input for selecting the first indicator is received, edits a certain sentence corresponding to the selected first indicator.

Since the accompanying drawings are merely for easily understanding embodiments disclosed herein, it should be understood that the technical spirit disclosed herein is not limited by the accompanying drawings, and all changes, equivalents or substitutions are included in the spirit and technical scope of the present disclosure.

Meanwhile, an operation method of the present disclosure can also be embodied as processor readable code on a processor-readable recording medium. The processor-readable recording medium includes all kinds of recording apparatuses storing data that can be read by a processor. Examples of the processor-readable recording medium is ROM, RAM, CD-ROM, magnetic tapes, floppy disks, optical data storage apparatuses, and, including those that are implemented in the form of carrier waves such as data transmission through the Internet. In addition, the processor-readable recording medium is dispersed in computer systems connected through a network, so that the processor-readable code can be stored and executed in a distributed fashion.

Although the present disclosure has been described with reference to specific embodiments shown in the drawings, it is apparent to those skilled in the art that the present description is not limited to those exemplary embodiments and is embodied in many forms without departing from the scope of the present disclosure, which is described in the following claims. These modifications should not be individually understood from the technical spirit or scope of the present disclosure.

## Claims

1. An image display apparatus comprising:
a display;
an external apparatus interface unit which communicates with a remote control device;
a network interface unit which communicates with at least one server; and
a control unit,
wherein the control unit, on the basis that a first command for activating a function of receiving a voice input from the remote control device is received, outputs, through the display, a predetermined screen including a first object corresponding to a termination of the function,
on the basis that the voice input is received from the remote control device, outputs, through the predetermined screen, a text corresponding to the voice input that is received from the remote control device, and
on the basis that a second command for selecting the first object is received, processes an entire text that is output through the predetermined screen.

2. The image display apparatus of claim 1, wherein the control unit, if a first voice input received from the remote control device corresponds to a sentence, outputs a second object corresponding to an additional receiving of voice input through the predetermined screen, and
if a third command for selecting the second object is received from the remote control device, additionally receives a second voice input from the remote control device.

3. The image display apparatus of claim 1, wherein if the first command is received again before the second command is received, the control unit initializes the entire text output through the predetermined screen.

4. The image display apparatus of claim 1, wherein the control unit, if a first voice input corresponding to text editing is received from the remote control device, edits the text corresponding to a second voice input output through the predetermined screen before the first voice input is received, by using at least one keyword included in the first voice input.

5. The image display apparatus of claim 1, wherein the control unit, on the basis that the first voice input is received from the remote control device, outputs a text corresponding to the first voice input through the predetermined screen, and,
if it is determined that the first voice input corresponds to editing the text, removes the text corresponding to the first voice input from the predetermined screen.

6. The image display apparatus of claim 4, wherein the control unit, if the keyword is included in the text corresponding to the second voice input, edits the text corresponding to the second voice input, based on the keyword, and,
if the keyword is not included in the text corresponding to the second voice input, edits the text corresponding to the second voice input, based on a sentence element corresponding to the keyword.

7. The image display apparatus of claim 1, wherein the control unit,
if a certain time is elapsed after a certain voice input is received, requests the server to transmit at least one first keyword related with the certain voice input,
outputs the at least one first keyword received from the server through the predetermined screen, and
if a third command for selecting one of the at least one first keyword is received from the remote control device, requests the server to transmit at least one second keyword related with the certain voice input and the selected first keyword.

8. The image display apparatus of claim 1, wherein the control unit, if the text corresponding to the voice input constitutes a sentence, outputs a first indicator indicating a sentence to be adjacent to the constituted sentence through the predetermined screen, and
edits a certain sentence corresponding to the selected first indicator, on the basis that an input for selecting the first indicator is received from the remote control device.

9. The image display apparatus of claim 8, wherein the control unit outputs a second indicator indicating a sentence element constituting the certain sentence to be adjacent to the sentence element, on the basis that an input for selecting the first indicator is received from the remote control device.

10. A system comprising an image display apparatus, a remote control device, and at least one server,
wherein the remote control device transmits a first command that activates a function of receiving a voice input to the image display apparatus, and
transmits a voice input received through a microphone to the image display apparatus while the function is activated,
wherein the image display apparatus outputs a predetermined screen including a first object corresponding to a termination of the function, on the basis that the first command is received from the remote control device,
transmits the voice input received from the remote control device to the server,
outputs a text corresponding to the voice input received from the server through the predetermined screen, and
processes an entire text output through the predetermined screen, on the basis that a second command for selecting the first object is received.

11. The system of claim 10, wherein the server comprises:
a first server which converts a voice into a text;
a second server which processes a text; and
a third server which transmits data between the first server, the second server, and the image display apparatus,
wherein if a text corresponding to a voice input received from the image display apparatus corresponds to a sentence, any one of the first server and the third server transmits the text corresponding to the voice input to the second server, and
the second server performs an intent analysis on the text corresponding to the voice input.

12. The system of claim 11, wherein the second server, if the text corresponding to the voice input does not correspond to editing of text, transmits a keyword included in the voice input and a sentence element corresponding to the keyword to the image display apparatus, and
if the text corresponding to the voice input corresponds to the editing of text, transmits an editing type corresponding to the voice input and an editing-related keyword to the image display apparatus,
wherein the image display apparatus outputs a text corresponding to the first voice input through the predetermined screen, while the first voice input is received from the remote control device,
if the first voice input corresponds to the editing of text, removes the text corresponding to the first voice input from the predetermined screen, and
edits a text corresponding to a second voice input output through the predetermined screen before the first voice input is received, by using the editing-related keyword according to an editing type corresponding to the first voice input.

13. The system of claim 10, wherein the image display apparatus, when a certain time is elapsed after receiving a certain voice input, requests the server to transmit at least one first keyword related with the certain voice input,
outputs the at least one first keyword received from the server through the predetermined screen, and
when a third command for selecting one of the at least one first keyword is received from the remote control device, requests the server to transmit at least one second keyword related with the certain voice input and the selected first keyword.

14. The system of claim 13, wherein the server determines a database corresponding to a keyword included in the first voice input from among a plurality of databases,
determines the at least one first keyword, based on data for a first sentence element in the database, and
determines the at least one second keyword, based on data for a second sentence element different from the first sentence element in the database.

15. The system of claim 10, wherein the image display apparatus, when the text corresponding to the voice input constitutes a sentence, outputs a first indicator indicating a sentence to be adjacent to the constituted sentence through the predetermined screen, and
on the basis that an input for selecting the first indicator is received, edits a certain sentence corresponding to the selected first indicator.
